# EUROPEAN PATENT APPLICATION

(11) **EP 1 220 125 A2**
(43) Date of publication of application: **03.07.2002**
(21) Application number: 01130228.8
(22) Date of filing: 19.12.2001
(51) Int. Cl.: G06F 17/60, G06F 17/30

(54) **Virtual real estate dealing method, server and terminal used therefor**

(30) Priority: 27.12.2000 JP 2000396655
(71) Applicant: NEC CORPORATION, Tokyo (JP)
(72) Inventor: Shimazu, Hideo, Minato-ku, Tokyo (JP)
(74) Representative: VOSSIUS & PARTNER

(57) **Abstract**

To acquire a virtual real estate dealing system capable of virtual dealings in real estates in a three-dimensional space. It handles a right to use avirtual estate displayed in a three-dimensional stereoscopic image by allowing it to be dealt in as a virtual real-estate, and permits a holder of the estate to further construct arbitrary three-dimensional objects such as an advertising tower and a signboard. To be more specific, real estate dealings in the virtual estate implemented in the three-dimensional space are conducted. To become an owner of the virtual real-estate (that is, a person having the right to use it), the right to use the estate is purchased by making a request to a three-dimensional space manager. If the person having the right to use it constructs the three-dimensional objects in an area of the three-dimensional space manager, the manager presents the three-dimensional objects in addition when a general user browses the three-dimensional stereoscopic space via the Internet.

## Description

The present invention relates to a virtual real-estate dealing method, a server and a terminal used therefor, and a control program record medium thereof, in particular to the virtual real-estate dealing method allowing a real estate to be virtually dealt in by a large number of users accessing a service providing server from a WWW (World Wide Web) terminal via a communication network such as the Internet.

As for a WWW search of a home page and so on, a general method thereof is to follow a menu prepared in advance and then follow a link to the page existing ahead of it or to give a keyword to a search engine and then search for a page hitting it. One of the characteristics of these searches is that the page is searched for quite independently of a physical location of a user (searcher).

For instance, if information on flower shops is searched for, pages hitting it are presented independently of the location of the user, such as the flower shops in Tokyo, Paris, Sapporo and so on. While it is convenient when it does not matter where the user exists, there are cases where, for instance, the user is standing in the Shibuya Station now and wants to find an appropriate flower shop, and so the user only wants to obtain the pages of the flower shops around Shibuya. In such a case, the couventinal method whereby those in Paris and Sapporo are included in the search is inconvenient.

As a method of solving it, there is one whereby two-dimensional map information is presented to the user, and if the user points at a certain place on the map, the shop information is presented by following a link to the shop information of that place. Such a method is quite commonly used, and it is exemplified by a case where there is a map of a certain country, for instance, and if a certain prefecture therein is specified, a jump is made to the information on that prefecture.

For instance, there is a map of France on the home page of the French Government Tourism Bureau (http://www.franceinformation.or.jp/oindex/index.html), and if one prefecture therein is clicked on with a mouse, a jump is made to the information on that prefecture. As this can be easily implemented on the Web by using a clickable map technique, it is very frequently used. As the cases where link target information thereof is limited to advertising information and also to a two-dimensional map, there are technologies disclosed in JP-A-11-212999 and JP-B-2756483.

A problem in these systems wherein the two-dimensional information is presented and an input from the user is accepted is as follows. Namely, while an information search from a map is convenient as work of the search, it is not enjoyable as means for using it. To be more specific, as the search from a map is simple work as if looking for a station in a line in a train timetable, there is no fun.

Then, it is thinkable to perform map display by using a three-dimensional stereoscopic image and effectively use it for actual business, in which case a business approach to sufficiently entertain the user who pays a usage fee is required as a matter of course since it is a profit making activity.

Accordingly, an object of the present invention is to provide a virtual real estate dealing method, a server and a terminal used therefor, and a control program record medium thereof, wherein stereoscopic image information is provided to the user by using three-dimensional map information and adding so-called three-dimensional object information such as buildings thereto, and the screen displaying the stereoscopic image information is divided into areas of dealing units to render them virtually capable of dealing and the user having acquired a right to use the area can add an advertisement thereto so that the user can effectively use the advertisement in the area and enjoy viewing it while successively changing a view position as if on a sightseeing flight on the display screen of the stereoscopic image.

According to the present invention, a virtual real estate dealing method can be acquired, which is characterized by including:
a first step of, in response to a browsing request from a client terminal, generating on a service providing server side, composite three-dimensional map image data by using three-dimensional map image data representing geographical information three-dimensionally and three-dimensional image data to be attached on areas of the three-dimensional map image data divided into minimum dealing units and sending it to the above described client terminal;
a second step of, on the above described client terminal side, receiving the above described composite three-dimensional map image data that is sent and performing three-dimensional stereoscopic image representation to provide it to a user, and in response to specification of a change of a view position from the above described user, regenerating the three-dimensional stereoscopic image representation as seen from this specified view position;
a third step of, in response to a usage browsing request from the above described client terminal, sending to the above described client terminal, of area information including a location, a usage situation, a user name and so on registered for each of the above described areas, at least the above described usage situation information on the above described service providing server side;
a fourth step of, on the above described client terminal side, sending to the above described service providing server a usage application request of the area together with the user name in response to selection of a specific area by the above described user; and
a fifth step of, on the above described service providing server side, giving information indicating that it is in use as the above described usage situation included in the above described area information of the area of the above described usage application request and also writing the above described user name to the above described area information.

And it is characterized by further including:
a sixth step of, on the above described client terminal side, in response to a request for image attachment on the area from the above described user of the area, sending to the above described service providing server an image addition request together with the data to be attached; and
a seventh step of, on the above described service providing server side, writing to the above described three-dimensional image data the above described image data to be attached in response to the above described image addition request.

In addition, the above described area information is characterized by including a usage price of the above described area and a payment account name of the user of the above described area who should pay the usage charge thereof, and the payment account name of the above described user is also sent in the above described fourth step, and this payment account name is also written in the above described fifth step.

According to the present invention, the virtual real estate dealing method can be acquired, which is characterized by including:
a first step of, in response to a browsing request from a client terminal, generating on a service providing server side, composite three-dimensional map image data by using three-dimensional map image data representing geographical information three-dimensionally and three-dimensional image data to be attached on areas of the three-dimensional map image data divided into minimum dealing units and sending it to the above described client terminal;
a second step of, on the above described client terminal side, receiving the above described composite three-dimensional map image data that is sent and performing three-dimensional stereoscopic image representation to provide it to a user, and in response to specification of a change of a view position from the above described user, regenerating the three-dimensional stereoscopic image representation as seen from this specified view position;
a third step of, in response to the above described request for browsing of a desired area for sale from the above described client terminal, of for-sale information from a virtual estate sale brokerage management portion wherein the above described for-sale information including the desired area for sale and a desired selling price is registered, extracting and sending at least the above described desired area for sale and the above described desired selling price on the above described service providing server side;
a fourth step of, on the above described client terminal side, displaying the above described desired area for sale and the above described desired selling price that are sent and sending to the above described service providing server a desired purchase area of an interested user together with the user name;
a fifth step of, on the above described service providing server side, issuing a sales contract of the desired purchase area and, of area information including a location, a usage situation, a user name and so on registered for each of the above described areas, writing the new user name as the above described user name included in the above described area information of the area of the executed sales contract; and
a sixth step of, on the above described service providing server side, deleting the above described for-sale information on the above described area of the executed sales contract registered with the above described virtual estate sale brokerage management portion.

In addition, it is characterized by further including:
a seventh step of, in response to the sale request of the above described area of the user of the area, sending to the above described service providing server the above described for-sale information together with the above described sale request on the above described client terminal side;
an eighth step of, in response to the sale request, referring to the above described area information to authenticate the above described user and registering the above described for-sale information with the virtual estate sale brokerage management portion on the above described service providing server side.

Moreover, it has a characteristic that the above described area information includes the payment account name of the user of the above described area who should pay the usage charge thereof, and the payment account name of the above described user is also sent in the above described fourth step, and this payment account name is also written in the above described fifth step.

According to the present invention, the virtual real estate dealing method can be acquired, which is characterized by including:
the first step of, in response to a browsing request from the client terminal, generating on the service providing server side, composite three-dimensional map image data by using three-dimensional map image data representing geographical information three-dimensionally and three-dimensional image data to be attached on the areas of the three-dimensional map image data divided into the minimum dealing units and sending it to the above described client terminal;
the second step of, on the above described client terminal side, receiving the above described composite three-dimensional map image data that is sent and performing three-dimensional stereoscopic image representation to provide it to a user, and in response to specification of a change of a view position from the above described user, regenerating the three-dimensional stereoscopic image representation as seen from this specified view position;
the third step of, in response to the above described request for browsing of the desired area for rent from the above described client terminal, of for-rent information indicated as vacant by rental situation information from a virtual estate rental brokerage management portion wherein the above described for-rent information including the desired area for rent and the desired rental price, the above described rental situation information indicating the rental situation of the above described desired area for rent, and tenant information indicating the user name renting the above described desired area for rent are registered, extracting and sending at least the above described desired area for rent and the above described desired rental price on the above described service providing server side;
the fourth step of, on the above described client terminal side, displaying the above described desired area for rent and the above described desired rental price that are sent and sending to the above described service providing server the above described desired area for rent selected by the interested user together with the user name;
the fifth step of, on the above described service providing server side, writing the new user name to the above described tenant information of the above described desired area for rent of the above described virtual estate rental brokerage management portion; and
the sixth step of, on the above described service providing server side, indicating it as rented in the above described rental situation information of this desired area for rent registered with the above described virtual estate rental brokerage management portion.

In addition, it is characterized by further including:
the seventh step of, in response to the rent request of the area of the user of the above described area, sending to the above described service providing server the above described for-rent information together with the above described rent request on the above described client terminal side;
the eighth step of, in response to the rent request, on the above described service providing server side, referring to the area information including the location, the usage situation, the user name and so on registered for each of the above described areas to authenticate the above described user and registering the above described for-rent information with the virtual estate rental brokerage management portion;

And it has a characteristic that the payment account name to pay the rent of the area is registered with the above described virtual estate rental brokerage management portion, and the payment account name of the above described user is also sent in the above described fourth step, and this payment account name is also written to the above described portion in the above described fifth step.

According to the present invention, the virtual real estate dealing server can be acquired, which is characterized by including:
an area information management portion for storing the area information including the location, the usage situation, the user name and so on of each of the areas of the three-dimensional map image data divided into the minimum dealing units;
a three-dimensional image storing portion for storing the three-dimensional image data to be attached on the above described area;
a map superimposing portion for generating the composite three-dimensional map image data by using the three-dimensional map image data representing the geographical information three-dimensionally and the above described three-dimensional image data stored in the above described three-dimensional image storing portion and sending it to a client terminal;
a usage browsing acceptance portion for, in response to a estate usage browsing request from the above described client terminal, referring to the above described area information management portion and sending to the above described client terminal at least the above described usage situation information of the above described area information; and
a usage application acceptance portion for, in response to a estate usage application request from the above described client terminal, accepting a usage application of a specific area from the above described client terminal together with the user name and, of the above described area information stored in the above described area information management portion, giving information indicating that it is in use as the above described usage situation of the above described area information of the area of the above described usage application request and also writing the above described user name to the area information.

And it is characterized by further including an image addition acceptance portion for, in response to an image addition request including the image data to be attached on the above described area from the user of the above described area, writing the above described image data to be attached to the above described three-dimensional image data. In addition, the above described area information includes the usage price of the above described area and the payment account name of the user of the above described area who should pay the usage charge thereof, and the above described usage application acceptance portion also writes the payment account name of the above described user to the above described area information in response to the estate usage application request from the above described client terminal.

According to the present invention, the virtual real estate dealing server can be acquired, which is characterized by including:
the area information management portion for storing the area information including the location, the usage situation, the user name and so on of each of the areas of three-dimensional map image data divided into the minimum dealing units;
the three-dimensional image storing portion for storing the three-dimensional image data to be attached on the above described area;
the map superimposing portion for generating the composite three-dimensional map image data by using the three-dimensional map image data representing the geographical information three-dimensionally and the above described three-dimensional image data stored in the above described three-dimensional image storing portion and sending it to the client terminal;
the sale brokerage management means for registering the for-sale information including the desired area for sale and the desired selling price;
the sale application browsing acceptance portion for, in response to the request for browsing of the above described desired area for sale from the above described client terminal, of the above described for-sale information registered with the above described sale brokerage management means, extracting and sending at least the above described desired area for sale and the above described desired selling price; and
the purchase application acceptance portion for, in response to the reception of the desired purchase area of the user desirous of purchase and the user name from the above described client terminal, issuing the sales contract on the desired purchase area and, writing the new user name as the above described user name included in the above described area information of the area of the executed sales contract, and further deleting the above described for-sale information on the above described area of the executed sales contract registered with the above described sale brokerage management means.

And it is characterized by further including a sale application acceptance portion for, in response to the sale request indicating the above described for-sale information from the user of the above described area, registering the above described for-sale information with the sale brokerage management means. In addition, the above described area information includes the payment account name of the user of the above described area who should pay the usage charge thereof, and the above described purchase application acceptance portion also writes the payment account name of the above described user to the above described area information in response to reception of the desired purchase area of the user desirous there of, the user name and the payment account name of the above described user from the above described client terminal.

According to the present invention, the virtual real estate dealing server can be acquired, which is characterized by including:
the three-dimensional image storing portion for storing the three-dimensional image data to be attached on the areas of the three-dimensional image data divided into the minimum dealing units;
the map superimposing portion for generating the composite three-dimensional map image data by using the three-dimensional map image data representing geographical information three-dimensionally and the above described three-dimensional image data stored in the above described three-dimensional image storing portion and sending it to the client terminal;
the virtual estate rental brokerage management portion for registering the for-rent information including the desired area for rent and the desired rental price, the rental situation information indicating the rental situation of the above described desired area for rent, and the tenant information indicating the user name renting the above described desired area for rent;
a rented estate browsing acceptance portion for, in response to a request for browsing of the above described desired area for rent, of the above described for-rent information indicating the above described rental situation information as vacant of the above described for-rent information registered with the above described virtual estate rental brokerage management means, extracting and sending at least the above described desired area for rent and the above described desired rental price;
a rented estate application acceptance portion for receiving the above described area for rent desired to be rented and the user name from the above described client terminal, and writing the newuser name to the above described tenant information on the above described desired area for rent of the above described virtual estate rental brokerage management portion, and further indicating it as rented in the above described rental situation information of this desired area for rent registered with the above described virtual estate rental brokerage management means.

And it is characterized by further including a rental application acceptance portion for registering the above described for-rent information with the above described virtual estate rental brokerage management portion in response to the rent request indicating the above described for-rent information from the user of the above described area. In addition, it has a characteristic that the payment account name to pay the rent of the above described area in the above described area information is registered with the above described virtual estate rental brokerage management portion, and the above described rented estate application acceptance portion receives the above described payment account name in addition to the above described area for rent desired to be rented and the user name from the above described client terminal and also writes the above described payment account name to the above described virtual estate rental brokerage management portion.

According to the present invention, the client terminal can be acquired, which is characterized by including:
an estate situation browsing portion for having the composite three-dimensional map image data generated by the above described service providing server by using the three-dimensional map image data representing the geographical information three-dimensionally and the three-dimensional image data to be attached on the areas of the three-dimensional map image data divided into the minimum dealing units, the above described service providing server storing in each storing portion the above described three-dimensional map image data and the above described three-dimensional image data, and also receiving the above described composite three-dimensional map image data and performing three-dimensional stereoscopic image representation to provide it to a user, and in response to specification of a change of a view position from the above described user, regenerating the three-dimensional stereoscopic image representation as seen from this specified view position;
a browsing application portion for making a usage browsing request for browsing the usage situation of the above described area and having the above described service providing server send at least information on the above described usage situation of the area information including the location, the usage situation, the user name and so on registered for each of the above described areas so as to present the above described information on the usage situation that is sent; and
a usage application portion for making a usage application request for applying for usage of the above described area and having the above described service providing server give the information indicating that it is in use as the above described usage situation included in the above described area information of the area of the above described usage application request and further write the above described user name having applied for the usage to the above described area information.

And it is characterized by further including an image addition portion for making the image addition request from the user of the above described area for requesting attachment of the three-dimensional image data on the area, and having the above described requested three-dimensional image data registered with the above described service providing server.

According to the present invention, the client terminal can be acquired, which is characterized by including:
the estate situation browsing portion for having the composite three-dimensional map image data generated by the above described service providing server by using the three-dimensional map image data representing geographical information three-dimensionally and the three-dimensional image data to be attached on the areas of the three-dimensional map image data divided into the minimum dealing units, the above described service providing server storing in each storing portion the above described three-dimensional map image data and the above described three-dimensional image data, and also receiving the above described composite three-dimensional map image data and performing the three-dimensional stereoscopic image representation to provide it to the user, and in response to specification of the change of the view position from the above described user, regenerating the three-dimensional stereoscopic image representation as seen from this specified view position;
a sale application browsing portion for making a browsing request to the above described service providing server with which for-sale information including the desired area for sale and the desired selling price is registered, for the purpose of requesting presentation of the above described desired area for sale, and having, of the above described for-sale information, at least the above described desired area for sale and the above described desired selling price sent, and presenting the above described desired area for sale and the above described desired selling price that are sent; and
a purchase application portion for sending a purchase request for purchasing the above described presented desired area for sale together with the desired purchase area and the user name, having the above described service providing server issue the sales contract on the desired purchase area and, of the area information including the location, the usage situation, the user name and so on registered for each of the above described areas, write the new user name as the above described user name included in the above described area information of the area of the sales contract, and further delete the above described for-sale information on the area of the executed sales contract.

And it is characterized by further including a sale application portion for sending the sale request for requesting sale of the above described area from the user thereof together with the above described for-sale information and having the for-sale information that is sent registered with the above described service providing server.

According to the present invention, the client terminal can be acquired, which is characterized by including:
the estate situation browsing portion for having the composite three-dimensional map image data generated by the above described service providing server by using the three-dimensional map image data representing the geographical information three-dimensionally and the three-dimensional image data to be attached on the areas of the three-dimensional map image data divided into minimum dealing units, the above described service providing server storing in each storing portion the above described three-dimensional map image data and the above described three-dimensional image data, and also receiving the above described composite three-dimensional map image data and performing three-dimensional stereoscopic image representation to provide it to a user, and in response to the specification of the change of the view position from the above described user, regenerating the three-dimensional stereoscopic image representation as seen from this specified view position;
a rented estate application browsing portion for making a browsing request to the above described service providing server with which the for-rent information including the desired area for rent and the desired rental price, the rental situation information indicating the rental situation of the above described desired area for rent and the tenant information indicating the user name for renting the above described desired area for rent are registered, for the purpose of requesting presentation of the above described desired area for rent, and having, of the above described for-rent information of which rental situation information indicates a vacancy, at least the above described desired area for rent and the above described desired rental price sent, and presenting the above described desired area for rent and the above described desired rental price that are sent; and
a rented estate application portion for sending a rental request for renting the above described presented desired area for rent together with the desired area for rent and the user name, having the above described service providing server write the new user name in the above described tenant information of the desired area for rent and further indicate it as rented in the above described rental situation information of the desired area for rent.

And it is characterized by further including a rental application portion for sending the rental request for requesting rental of the above described area from the user thereof together with the above described for-rent information and having the for-rent information that is sent registered with the above described service providing server.

According to the present invention, a record medium can be acquired, which is characterized by having a program for a server recorded, said program causing a computer to execute:
an area information management process of storing the area information including the location, the usage situation, the user name and so on of each of the areas of the three-dimensional map image data divided into the minimum dealing units;
a three-dimensional image storing process of storing the three-dimensional image data to be attached on the above described area;
a map superimposing process of generating the composite three-dimensional map image data by using three-dimensional map image data representing geographical information three-dimensionally and the above described three-dimensional image data stored by the above described three-dimensional image storing process and sending it to a client terminal;
a usage browsing acceptance process of, in response to an estate usage browsing request from the above described client terminal, sending to the above described client terminal at least the above described usage situation information of the above described area information; and
a usage application acceptance process of, in response to the estate usage application request from the above described client terminal, accepting the usage application of the specific area from the above described client terminal together with the user name and, of the above described area information stored in the above described area information management portion, giving the information indicating that it is in use as the above described usage situation of the above described area information of the area of the above described usage application request and also writing the above described user name to the area information.

According to the present invention, the record medium can be acquired, which is characterized by having the program for the server recorded, the above described program causing the computer to execute:
the area information management process of storing the area information including the location, the usage situation, the user name and so on of each of the areas of the three-dimensional map image data divided into the minimum dealing units;
the three-dimensional image storing process of storing the three-dimensional image data to be attached on the above described area;
the map superimposing process of generating the composite three-dimensional map image data by using the three-dimensional map image data representing the geographical information three-dimensionally and the above described three-dimensional image data stored by the above described three-dimensional image storing process and sending it to the client terminal;
the sale brokerage management process of registering the for-sale information including the desired area for sale and the desired selling price; and
the sale application browsing acceptance process of, in response to the request for browsing of the above described desired area for sale from the above described client terminal, of the above described for-sale information registered by the above described sale brokerage management process, extracting and sending at least the above described desired area for sale and the above described desired selling price; and
a purchase application acceptance process of, in response to reception of the desired purchase area of the user desirous of purchase and the user name from the above described client terminal, issuing the sales contract on the desired purchase area and, writing the new user name as the above described user name included in the above described area information of the area of the executed sales contract, and further deleting the above described for-sale information on the above described area of the executed sales contract registered with the above described sale brokerage management means.

According to the present invention, the record medium can be acquired, which is characterized by having the program for the server recorded, the above described program causing the computer to execute:
the three-dimensional image storing process of storing the three-dimensional image data to be attached on the areas of the three-dimensional map image data divided into the minimum dealing units;
the map superimposing process of generating the composite three-dimensional map image data by using the three-dimensional map image data representing the geographical information three-dimensionally and the above described three-dimensional image data stored by the above described three-dimensional image storing process and sending it to a client terminal;
a virtual estate rental brokerage management process of registering the for-rent information including the desired area for rent and the desired rental price, the rental situation information indicating the rental situation of the above described desired area for rent, and the tenant information indicating the user name renting the above described desired area for rent;
a rented estate browsing acceptance process of, in response to a request for browsing of the above described desired area for rent, of the above described for-rent information indicating the above described rental situation information as vacant of the above described for-rent information registered by the above described virtual estate rental brokerage management process, extracting and sending at least the above described desired area for rent and the above described desired rental price; and
a rented estate application acceptance process of receiving the above described area for rent desired to be rented and the user name from the above described client terminal, and writing the new user name to the above described tenant information on the above described desired area for rent registered by the above described virtual estate rental brokerage management process, and further indicating it as rented in the above described rental situation information of this desired area for rent registered by the above described virtual estate rental brokerage management process.

According to the present invention, the record medium can be acquired, which is characterized by having the program for a client recorded, the above described program causing the computer to execute:
an estate situation browsing process of having the composite three-dimensional map image data generated by the above described service providing server by using the three-dimensional map image data representing the geographical information three-dimensionally and the three-dimensional image data to be attached on the areas of the three-dimensional map image data divided into the minimum dealing units, the above described service providing server storing in each storing portion the above described three-dimensional map image data and the above described three-dimensional image data, and also receiving the above described composite three-dimensional map image data and performing the three-dimensional stereoscopic image representation to provide it to the user, and in response to the specification of the change of the view position from the above described user, regenerating the three-dimensional stereoscopic image representation as seen from this specified view position;
a browsing application process of making a usage browsing request for browsing the usage situation of the above described area and having the above described service providing server send at least the information on the above described usage situation of the area information including the location, the usage situation, the user name and so on registered for each of the above described areas so as to present the above described information on the usage situation that is sent; and
a usage application process of making a usage application request for applying for usage of the above described area and having the above described service providing server give the information indicating that it is in use as the above described usage situation included in the above described area information of the area of the above described usage application request and further write the above described user name having applied for the usage to the above described area information.

According to the present invention, the record medium can be acquired, which is characterized by having the program for the client recorded, the above described program causing a computer to execute:
the estate situation browsing process of having the composite three-dimensional map image data generated by the above described service providing server by using the three-dimensional map image data representing the geographical information three-dimensionally and the three-dimensional image data to be attached on the areas of the three-dimensional map image data divided into the minimum dealing units, the above described service providing server storing in each storing portion the above described three-dimensional map image data and the above described three-dimensional image data, and also receiving the above described composite three-dimensional map image data and performing the three-dimensional stereoscopic image representation to provide it to a user, and in response to the specification of the change of the view position from the above described user, regenerating the three-dimensional stereoscopic image representation as seen from this specified view position;
a sale application browsing process of making the browsing request to the above described service providing server with which the for-sale information including the desired area for sale and the desired selling price is registered, for the purpose of requesting presentation of the above described desired area for sale, and having, of the above described for-sale information, at least the above described desired area for sale and the above described desired selling price sent, and presenting the above described desired area for sale and the above described desired selling price that are sent; and
a purchase application process of sending the purchase request for purchasing the above described presented desired area for sale together with the desired purchase area and the user name, having the above described service providing server issue the sales contract on the desired purchase area and, of the area information including the location, the usage situation, the user name and so on registered for each of the above described areas, write the new user name as the above described user name included in the above described area information of the area of the sales contract, and further delete the above described for-sale information on the above described area of the executed sales contract.

According to the present invention, the record medium can be acquired, which is characterized by having the program for a client recorded, the above described program causing a computer to execute:
the estate situation browsing process of having the composite three-dimensional map image data generated by the above described service providing server by using the three-dimensional map image data representing the geographical information three-dimensionally and the three-dimensional image data to be attached on the areas of the three-dimensional map image data divided into the minimum dealing units, the above described service providing server storing in each storing portion the above described three-dimensional map image data and the above described three-dimensional image data, and also receiving the above described composite three-dimensional map image data and performing the three-dimensional stereoscopic image representation to provide it to the user, and in response to the specification of the change of the view position from the above described user, regenerating the three-dimensional stereoscopic image representation as seen from this specified view position;
a rented estate application browsing process of making a browsing request to the above described service providing server with which the for-rent information including the desired area for rent and the desired rental price, the rental situation information indicating the rental situation of the above described desired area for rent and the tenant information indicating the user name for renting the above described desired area for rent are registered, for the purpose of requesting presentation of the desired area for rent, and having, of the above described for-rent information of which rental situation information indicates a vacancy, at least the above described desired area for rent and the above described desired rental price sent, and presenting the above described desired area for rent and the above described desired rental price that are sent ; and
a rented estate application process of sending a rental request for renting the above described presented desired area for rent together with the desired area for rent and the user name, having the above described service providing server write the new user name in the above described tenant information of the desired area for rent and further indicate it as rented in the above described rental situation information of the desired area for rent.

A principle of the present invention will be described. According to the present invention, the right to use a virtual estate displayed in a three-dimensional image is handled so as to be salable as a virtual real estate, and a holder of the estate is permitted to construct thereon a three-dimensional object of an advertising medium such as an advertising tower or a signboard. To be more specific, real estate dealings in virtual estates implemented in this three-dimensional space are performed. To become an owner of the virtual real estate (that is, a person having the right to use it), the right to use the estate is purchased by requesting a manager of the three-dimensional space. If those who have the right to use it construct three-dimensional objects in the area of the three-dimensional space manager, the manager presents such objects when the general user browses the three-dimensional space via the Internet.

For instance, if advertisements such as "A Motors," "C Beer of B Foods" and "E Cosmetics of D Pharmaceutical" are rendered in the shape of an advertising balloon, an airship or a swallow and placed on the estate of one's own, it has the effect that those who want to go sightseeing in the three-dimensional space cannot help seeing them. This is a situation similar to that of the signboards placed in an actual street. While any desired signboard can be placed on one's own estate, it is not allowed in principle to place one on another person's estate. This is to implement it in the virtual estate world. To be more specific, each area in the three-dimensional space is handled as a virtual real estate to be dealt in, so that a further degree of flexibility can be acquired.

In addition, the owner of the virtual real estate (a person having acquired the right to use it) acquires the right to use the area while the price is low, and sells the right at a high price to obtain a sale profit as the amount of money for acquiring the right increases with an increasing value of the three-dimensional space itself on the Internet. The three-dimensional space manager plays a role of brokering sale of such a right.

Furthermore, it is possible for the owner of the virtual real estate to sublet to another person the area that he or she has the right to use as one for rent instead of letting go of the right or using it himself or herself. The three-dimensional space manager also plays a role of brokering rental of such an area.
FIG. 1 is a block diagram of a first embodiment of the present invention;
FIG. 2 is a diagram showing an example of a three-dimensional image storing portion 3 in FIG. 1;
FIG. 3 is a part of a flowchart for explaining operation of the first embodiment;
FIG. 4 is a part of the flowchart for explaining the operation of the first embodiment;
FIG. 5 is a part of the flowchart for explaining the operation of the first embodiment;
FIG. 6 is a block diagram of a second embodiment of the present invention;
FIG. 7 is a part of a flowchart for explaining operation of the embodiment in FIG. 6;
FIG. 8 is apart of the flowchart for explaining the operation of the embodiment in FIG. 6;
FIG. 9 is apart of the flowchart for explaining the operation of the embodiment in FIG. 6;
FIG. 10 is a block diagram of a third embodiment of the present invention;
FIG. 11 is a part of a flowchart for explaining operation of the embodiment in FIG. 10;
FIG. 12 is a part of the flowchart for explaining the operation of the embodiment in FIG. 10;
FIG. 13 is a part of the flowchart for explaining the operation of the embodiment in FIG. 10;
FIG. 14 is a diagram showing an overview of processing of a conventional example;
FIG. 15 is a diagram showing DEM rendering in a three-dimensional space;
FIG. 16 is a diagram showing an example of the three-dimensional space;
FIG. 17 is a diagram showing an approach to dealing in an advertising tower in the three-dimensional space; and
FIG. 18 is a diagram showing outline principles of the respective embodiments of the present invention.

The following will describe the embodiments of the present invention. Before it, a technology currently proposed by the inventors hereof on a method of generating three-dimensional map image data and a three-dimensional image to be used for the present invention will be described.

The inventors hereof make proposals of a data generation technology related to Japanese Patent Application No. 2000-226835. This proposed invention performs a stereo process by using two photos, that is, satellite photos taken by a space satellite or aerial photos taken from an aircraft of the same place so as to calculate information on height and directions of buildings, mountains and so on by computing from a parallax of the two photos, render it as a DEM (Digital Elevation Model) image, and render it as a polygon to automatically generate the three-dimensional image. It provides a midair stroll function of the three-dimensional space to the user based on it.

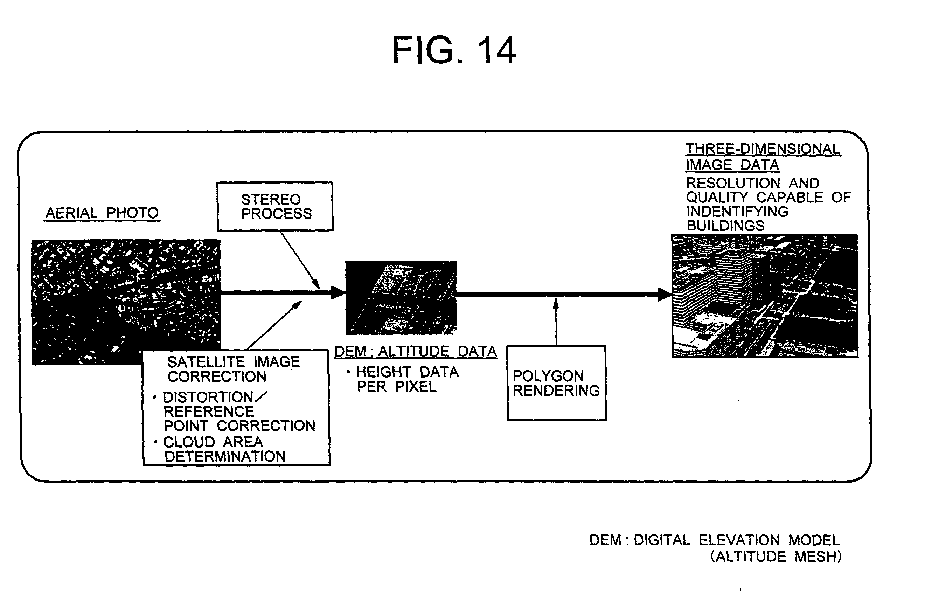

This proposed invention according to Japanese Patent Application No. 2000-226835 takes photos of the same area by the airplane or the artificial satellite periodically, such as every week, as shown in an outline of the process in FIG. 14. Here, such photos are referred to as aerial photos. Such aerial photos have already become generally available. For instance, those of the artificial satellite IKONOS operated by Spacing Imaging INC. of the U.S.A. can be purchased for several thousand yen per radius of 1 kilometer (in the case of monochrome) from its subsidiary in Japan. As IKONOS is capable of photographing the surface of the entire earth, it is also possible to purchase the latest aerial photo of the surface of the entire earth every week. As exact latitude and longitude information is added to such aerial photos, the areas where the photos are taken can be correctly known.

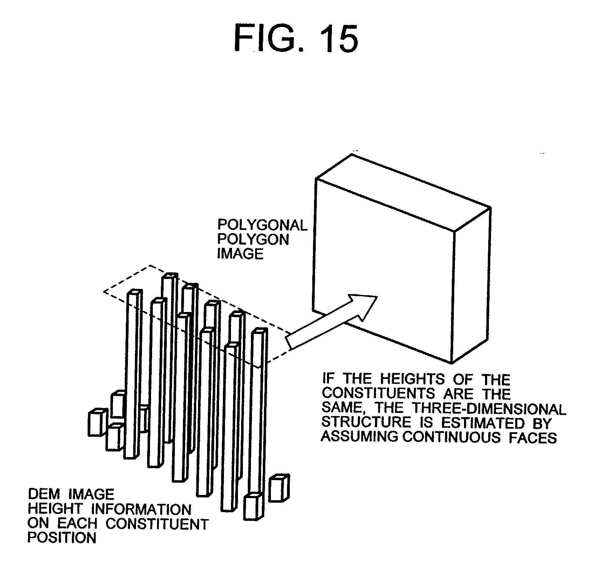

Next, the stereo process is performed to two aerial photos of the same area taken from different angles so as to calculate height and directions of buildings, mountains and so on from a deviation between the photos. It is not possible, in the stereo process, to extract the information indicating which are buildings and which are mountains from the aerial photos. In the stereo process, only height information per unit spot can be calculated. For instance, in the case of the photos taken by an airplane capable of flying low, the height can be calculated per radius of 25 cm on the surface of the earth. As IKONOS takes photos from much higher in the sky compared thereto, the height can be calculated per radius of 1m on the surface of the earth. This is called DEM rendering. As represented in FIG. 15, it looks like "kenzan" (a mountain of swords) used in Japanese flower arrangement (DEM image).

To continue the description of the case where the height information per radius of 1m is calculated, as for a building that is 20m long and wide and 30m high, it is calculated as 30m high in 20 × 20 = 400 points of its location, and if the surroundings are a level ground, it is calculated as 0m high in other points. If a rule, "it is one building in the case where points of the same height continue" is applied, it can be presumed that the building exists at the 20 × 20 location. This is called polygon rendering. The above is a flow of three-dimensional image generation by the stereo process.

Each individual constituent technologies of this process (stereo process, DEM rendering and polygon rendering) are the technologies that are already established. A standpoint of the present invention is that an appropriate existing stereo process should be used. Accordingly, any specific stereo processing technology, DEM rendering technology and polygon rendering technology are not assumed in the present invention. In addition, components of the present invention are not described in detail further than the components for performing the stereo process. If the stereo process is performed, landmarks such as buildings and mountains are extracted as polygonal polygon data.

In the present invention, what includes one or a plurality of the extracted landmarks of the polygonal polygon data is referred to as the three-dimensional map image data. In addition, an exact location information on a reference point in the photo is given in the case of the aerial photo, such location information on the landmarks are easily calculated by a distance of an xy axis from the reference point. It is possible to create a three-dimensional stereoscopic image representation based on this three-dimensional map image data and present it to the user. At that time, it is necessary to provide a view position as to which view it should be seen from. A stereoscopic image seen on a three-dimensional display is generated by projecting the three-dimensional stereoscopic representation on the view position of the user.

If this view position is changed, it shifts to a stereoscopic representation seen from a different position. If the view position is gradually and continuously moved, the stereoscopic image changes as if on a sightseeing flight. The technology to create the three-dimensional stereoscopic representation from the three-dimensional map image data has been established and the present invention is not intended to insist on something new concerning three-dimensional stereoscopic image generation, and the above proposed invention (the specification of Japanese Patent Application No. 2000-226835) is only using these technologies.

Thus, while this proposed invention (the specification of Japanese Patent Application No. 2000-226835) solves a technical problem to implement a three-dimensional sightseeing flight, it only describes a purely technical approach, and a method for actually creating business by using it or a mechanism required therefor was not added as a component in the invention. A general method of engaging in a profit making activity of providing such "sightseeing flight" as a service to the user is the method of collecting a usage fee from the user. To implement this, a three-dimensional database should be prepared on a server by using the Internet.

On the other hand, it is advertised by using various media that there is a home page that provides a sky flight service at a specific URL (Uniform Resource Locator). A mechanism is prepared, wherein if the user specifies the URL from a client computer connected to the Internet, the usage fee is collected on the home page specified thereon. As for this, there are methods such as having a credit card number inputted, which has recently become common on sale sites using the Internet and using a prepaid card, that is, electronic cash sold at convenience stores and so on and intended for settlement on the Internet.

Now, if the usage fee is collected on that home page, the three-dimensional image data of the specific area desired by the user and a program for creating the three-dimensional stereoscopic representation therefrom and presenting it to the user are sent from a WWW server to the client computer of the user. It is possible for the user to perform sightseeing flight after receiving the program and the three-dimensional image data on the client computer.

However, there are few successful examples business-wise as to such a method of collecting the usage fee from the user. As for the Internet, there are many successful examples not by a method of operating it by collecting a viewer fee like a public broadcast that is almost publicly managed but by a method of providing a service at no charge and having an advertisement seen in return like commercial broadcasting.

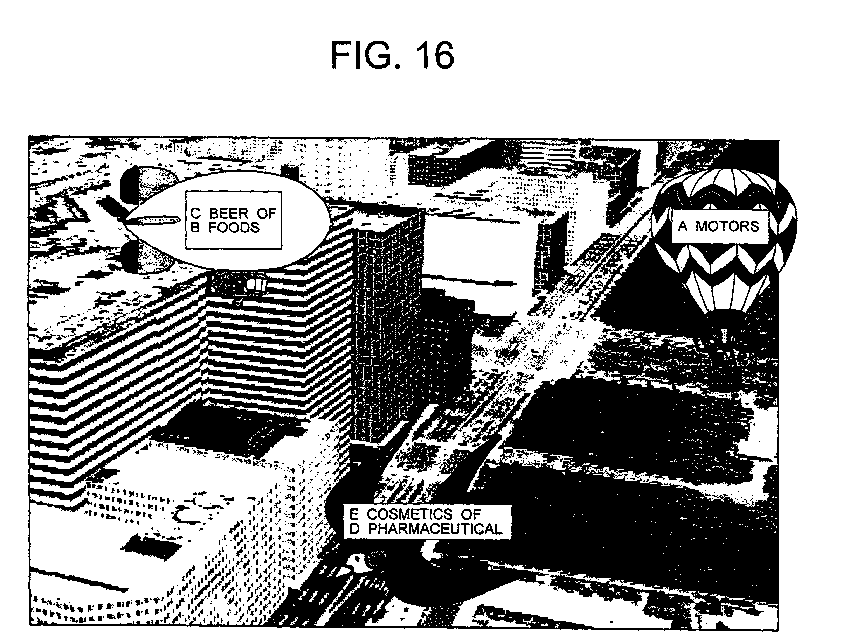

Thus, the inventors hereof propose a system wherein an apparatus for presenting an advertisement during the sightseeing flight in the three-dimensional stereoscopic image is implemented. The outline is as follows. As FIG. 16 shows, it places an advertising tower in the three-dimensional shape in a specific place of the three-dimensional space, and if the user comes close to the specific place during the "sightseeing flight," it is shown to the user just like the three-dimensional-shaped objects such as other buildings and parks in the three-dimensional space that are automatically generated from the aerial photos.

Here, the difference between the advertising tower in the three-dimensional shape and the three-dimensional-shaped objects such as other buildings and parks is that, while the latter is created from the aerial photos of the actual surface of the earth and so it truly existed there when photographed, the former, that is, the advertising tower "did not exist" in the aerial photos. To be more specific, it did not exist there at the time of photographing.

The shape of this advertising tower in the three dimensional shape can be various. For instance, it can be a drum-like shape with the advertising contents described beside it and floating in the air, or it can also be an advertising balloon, an airship, an airplane, a thunderhead or a stunt man with a placard floating in the air.

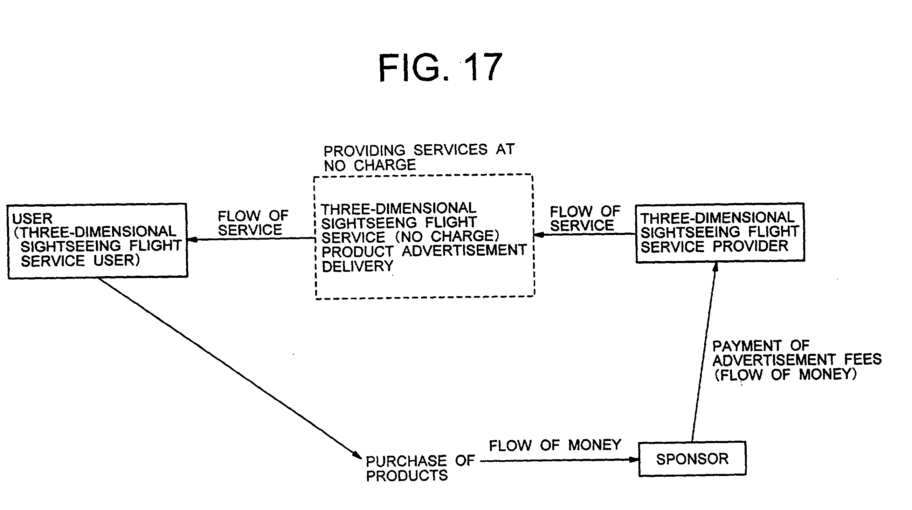

It is necessary for the user, in return for enjoyment of the sightseeing flight service at no charge, to put up with the advertising balloon, airship, airplane and thunderhead that do not naturally exist coming in view around the sightseeing flight. It is also possible for this sightseeing flight service provider to report to its sponsor how many users saw (could not help seeing, to mention it correctly) its advertisement. This proposed technology was a business model for dealing in presentation of advertisements in the three-dimensional space. It is represented in FIG. 17. It becomes another business model if this is further carried forward in the extreme.

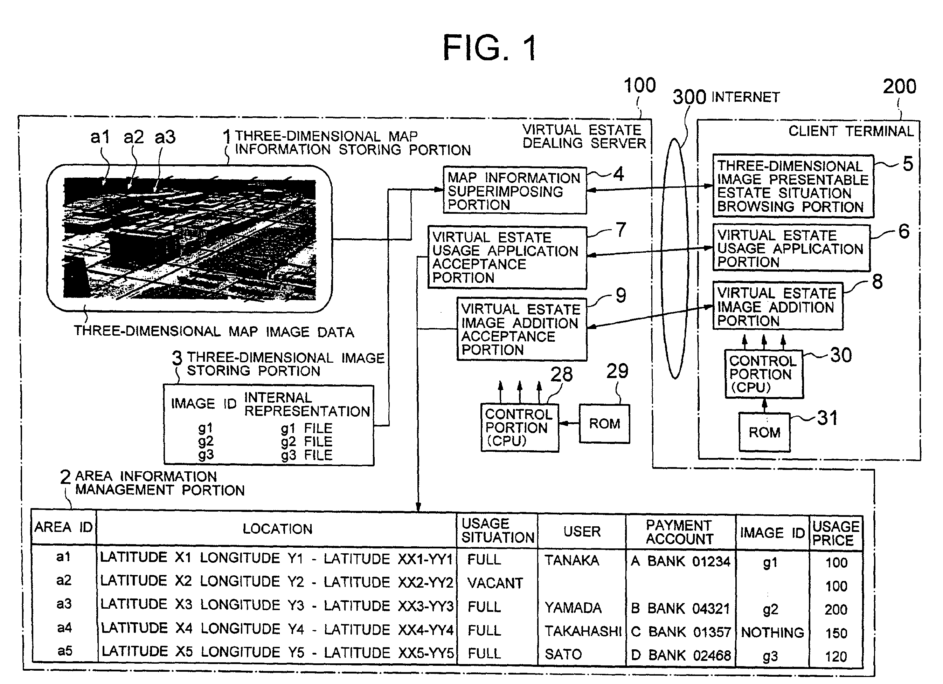

The present invention proposes the business model by using the above-mentioned three-dimensional images, and the embodiments of the present invention will be described in detail hereafter by referring to the drawings. FIG. 1 shows the embodiment of the present invention. A virtual estate dealing server (service providing server) 100 and a client terminal 200 are connected by an Internet 300 that is a communication network. In this case, while the client terminal 200 is shown as only one, it is terminal apparatuses such as personal computers held by each of a plurality (a large number) of the users in reality.

The virtual estate dealing server 100 has a three-dimensional map information storing portion 1, an area information management portion 2, a three-dimensional image storing portion 3, a map information superimposing portion 4, avirtual estate usage application acceptance portion 7, avirtual estate image addition acceptance portion 9, a control portion (CPU) 28 for controlling these portions and a ROM 29, which is a recordmedium storing as a program an operation control procedure of the control portion 28. In addition, a client terminal 200 has a three-dimensional image presentable estate situation browsing portion 5, a virtual estate usage application portion 6, a virtual estate image addition portion 8, and a control portion (CPU) 30 for controlling these portions, and a ROM 31, which is a record medium storing as a program the operation control procedure of the control portion 30.

The three-dimensional map information storing portion 1 holds the three-dimensional map image data representing virtual geographical information. This three-dimensional map information storing portion 1 is implemented by a memory storing its image file, and its contents are comprised of a map image ID, a location and the three-dimensional map image data. The map image ID is intended to identify the three-dimensional map image data generated based on the aerial photos, and the location indicates a reference location of this three-dimensional map image data on the surface of the earth. However, as for specification of this location, only latitude and longitude of the reference point need to be specified in the case where the three-dimensional image data to be generated has a fixed size (length, width and shape), while it is configured to have the data on the shape also stored in the same record in the case where each of the three-dimensional image data has a different size. This is implemented, for instance, in the case where it is only determined that each of the three-dimensional image data shows a rectangular area and lengths of the sides thereof are not determined, by configuring it to specify two points diagonally located in this rectangle.

The three-dimensional image storing portion 3 has a table configuration of which unit is a record comprised of an "image ID" item and an "internal representation" item. This is implemented by a table of a relational database. The three-dimensional image storing portion 3 has aunique identifier and an internal representation of the image file in the shape of the airship and the swallow shown in FIG. 16 stored as a pair therein. The unique identifier is stored in the "image ID" item and the internal representation is stored in the "internal representation" item.

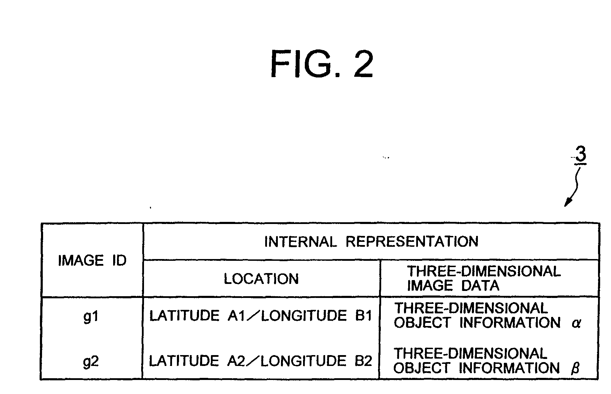

FIG. 2 shows a concrete example of the three-dimensional image storing portion 3, where the latitude and longitude that are location information and the three-dimensional image data are stored corresponding to image IDs g1 and g2 respectively and this three-dimensional image data is a three-dimensional object (internal representation data such as a building or an advertisement). Accordingly, the image ID is intended to uniquely identify the three-dimensional image data (three-dimensional object information).

Reference numeral 2 denotes the area information management portion. The area information management portion 2 is implemented as a table of the relational database. In that table, there are item names of Area ID, Location, Usage situation, User, Usage price, Payment account and Image ID. The area is a region of a minimum dealing unit area wherein three-dimensional map image data 1 is mechanically divided into the unit areas. The unique identifier given to each area is referred to as the area ID. The area ID is stored as an "area ID" attribute. The following attribute values exist in each area.

A "location" attribute is data of an absolute location of the area. In FIG. 1, it is assumed that the area has a rectangular shape. And the location can be represented by the pair of the latitude and longitude at the top left and bottom right. However, the shape of the area is arbitrary according to implementation, and in the case where all have the same size, it is possible to represent it only by latitude and longitude data of a diagonal contact or one point at the top left.

A "Usage situation" attribute represents whether or not the right to use the area is granted to someone. FIG. 1 is illustrated so that "Full" is entered in the case where the right to use the area is granted and "Vacant" is entered otherwise. A "User" attribute holds who the user is only when the "Usage situation" is "Full." A "Payment account" attribute records the payment account to pay the usage fee of the user to a three-dimensional midair manager when the "Usage situation" is "Full."

A "Usage price" attribute records the usage price for the sake of acquiring the right to use the area. As for the usage price, it is possible to indicate a different amount for each area. For instance, it can be expected that the same advertisement will be more effective if put up near a famous monument than in the middle of a desert since there are probably more visitors there. Thus, a higher amount can be indicated. An "Image ID" attribute allows a person having the right to use the area to specify the image to be attached on the area.

One of the values of the "Image ID" item of the three-dimensional image storing portion 3 is assigned to the "Image ID" attribute of the area information management portion 2. Here, the reason for not storing a bit map file or an icon file of the image file as-is but storing the image ID is as follows. When an enterprise puts up its own advertisement, it seems ordinary to put it up in a plurality of areas of the virtual estate. At that time, if the same image file of the airship is used, wasteful duplication can be eliminated by managing the image file with the ID so that the memory can be efficiently used.

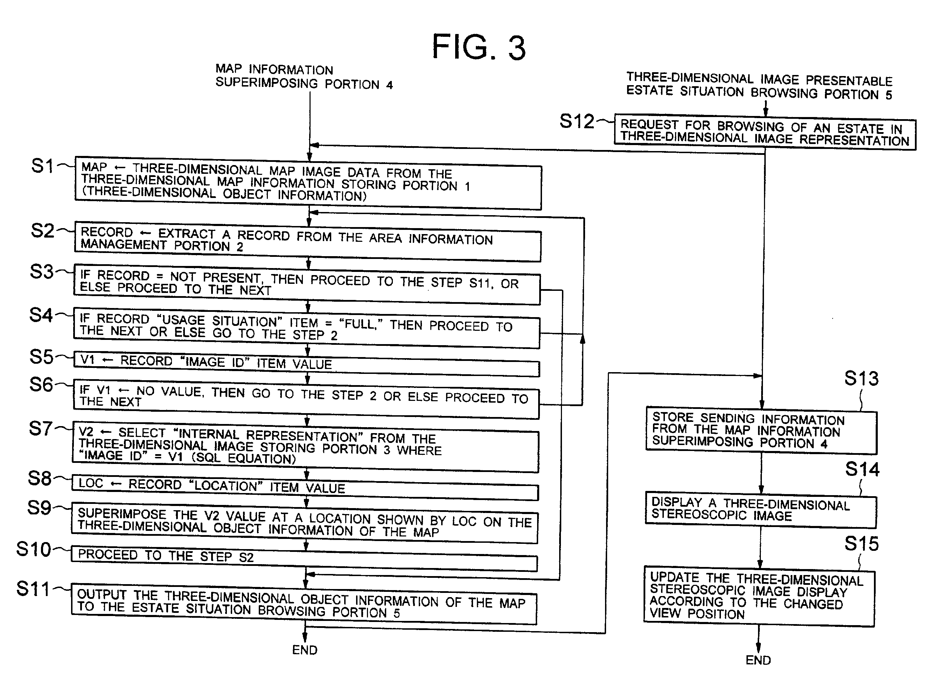

The map information superimposing portion 4 extracts the three-dimensional map image data from the three-dimensional map information storing portion 1, and extracts the information on the image data to be attached from the three-dimensional image storing portion 3 referring to the area information management portion 2 to generate composite three-dimensional map image data. This map information superimposing portion 4 collaborates with the three-dimensional image presentable estate situation browsing portion 5 of the client terminal 200, and that operation will be described by referring to a flowchart in FIG. 3. The map information superimposing portion 4 is started by a request from the estate situation browsing portion 5 (step S12) and extracts the three-dimensional map image data based on that location information from the three-dimensional map information storing portion 1 (step S1). Next, it extracts the records of which value of the "Usage situation" item is "Full" one by one for each area ID from the area information management portion 2 (step S2) so as to extract the value of the "Image ID" item thereof. At this time, if there is no data left in the area information management portion 2, it proceeds to the step S11, or stores the record in a Record variable otherwise (step S3).

It extracts the value of the "Usage situation" item of the record stored in the Record variable to a V1 variable. If it is "Full," it proceeds to the step S5, and if "Vacant," it returns to the step S2 since the usage situation is that it is not currently in use (step S4). The value of the "Image ID" item of the record stored in the Record variable is assigned to the V1 variable (step S5). And it checks the value of the V1 variable, and if "Vacant," it returns to the step S2 (step S6). Here, the "Vacant" means that the user owns that virtual estate but is not using it. If the owner of the estate wants to display the advertising tower and so on in his or her own estate, the "Image ID" of the advertising tower will be stored there.

The record of which value of the "Image ID" item is V1 is extracted from the three-dimensional image storing portion 3, and the value of the "internal representation" item of the record that is extracted is extracted and assigned to a V2 variable (step S7). The value of the "Location" item of the Recordvariable is extracted and stored in a Loc variable (step S8). The internal representation of the three-dimensional image stored by the V2 variable in the location shown by the Loc variable is displayed in superimposition to three-dimensional map image data stored by a Map variable (step S9), and it returns to the step S2 (step S10). And the value of the composite three-dimensional map image data wherein the internal representation indicated by the image ID held by each record of the area information management portion 2 that the Map variable has is displayed in superimposition to the value of the three-dimensional map image data stored by a Map variable is outputted to the three-dimensional image presentable estate situation browsing portion 5 (step S11).

As for a search of the record stored in the area information management portion 2, it is thinkable that the search of the record stored therein should be performed to all the area ID unit records stored therein. In addition, it is also thinkable that a search should be performed to the area ID unit records having the locations included in the range of the three-dimensional map image data that is extracted. Moreover, it is also thinkable that, in the area information management portion 2, the area ID unit records are stored in each area of a certain fixed range in advance and a search of the area ID unit records included in a specific area should be performed by referring to the location of the three-dimensional map image data that is extracted. Thus, a plurality of three-dimensional bit maps displayed in superimposition on the three-dimensional map image are outputted to the estate situation browsing portion 5.

This estate situation browsing portion 5 is used by the user in order to browse the virtual estate that is three-dimensionally represented. If the three-dimensional map image data is supplied, the estate situation browsing portion 5 stores it in a storage portion that is not shown (step S13), and also presents it to the user by generating the composite three-dimensional stereoscopic image to appear as the three-dimensional representation on the screen (step S14), and if the user specifies another view position, it repeats regenerating and presenting the three-dimensional stereoscopic image as seen from the new view position (step S15).

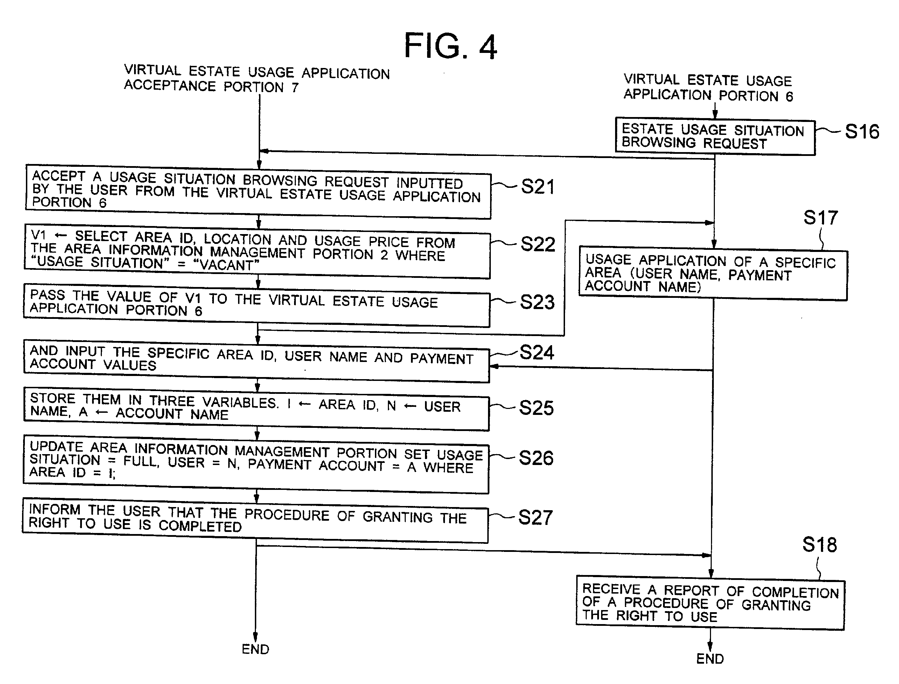

The virtual estate usage application portion 6 has a function of accepting usage situation browsing request and usage application request from the user for the purpose of using the virtual estate and collaborates with the virtual estate usage application acceptance portion 7, which operation will be described by referring to the flow in FIG. 4. This usage application request is passed to the virtual estate usage application acceptance portion 7 (step S16). It is also on the precondition that an access is made to the server 100 operated by the virtual estate usage application acceptance portion 7 via the Internet 300.

On receipt of the usage situation browsing request inputted by the user from the virtual estate usage application portion 6 (step S21), the virtual estate usage application acceptance portion 7 extracts the area ID of the record of which value of the "Usage situation" item is "Vacant," the value of the "Location" item thereof and the value of the "Usage price" item thereof (step S22). If the SQL (Structure Query Language) equation is used, it can be searched for as follows.
select Area ID, Location, Usage price from the area information management portion, where Usage situation = Vacant;

The information thus searched for is passed to the virtual estate usage application portion 6, which presents the information to the user by displaying it (step S23). Accordingly, the virtual estate usage application portion 6 also has a function of presenting the information on the usage situation of the area to the user. While the case of specifically presenting the area portion not in use of which "Usage situation" is "Vacant" was just described, it is also thinkable that the area portion in use which is "Full" should be specially presented, or both the area portion in use and the area portion not in use should be presented by differentiating between them.

In addition, as for the presentation of the information on the usage situation of the areas by the virtual estate usage application portion 6, the method of specifically presenting it to the area portion in the three-dimensional stereoscopic image presented in the estate situation browsing portion 5 and the method of presenting it in a representation form separately are thinkable. Accordingly, it is also possible to include the function of presenting the information on the usage situation of the area of the virtual estate usage application portion 6 in the estate situation browsing portion 5. If the virtual estate usage application portion 6 makes an estate usage application request to one (specific) area in a currently vacant area ID group that is presented by attaching the area ID specified by the user, the user name and the payment account (step S17), the virtual estate usage application acceptance portion 7 writes "Full" to the "Usage situation" item of the record in the area information management portion 2 that has the value of the area ID, writes the user name to the "User name" item and writes the payment account name attached by the user to the "Payment account" item (steps S24 and 25).

Here, in the case of temporarily storing the specific area ID in a variable I, the user name in a variable N and the payment account in a variable A, the SQL equation for storing them in the area information management portion will be as follows (step S26).
update Area information management portion
set Usage situation = Full, User = N, Payment account = A, where Area ID = I;

And the user is informed that the procedure of granting the right to use the area is completed (step S27). The virtual estate usage application portion 6 receives this report of completion of the grant of the right (step S18).

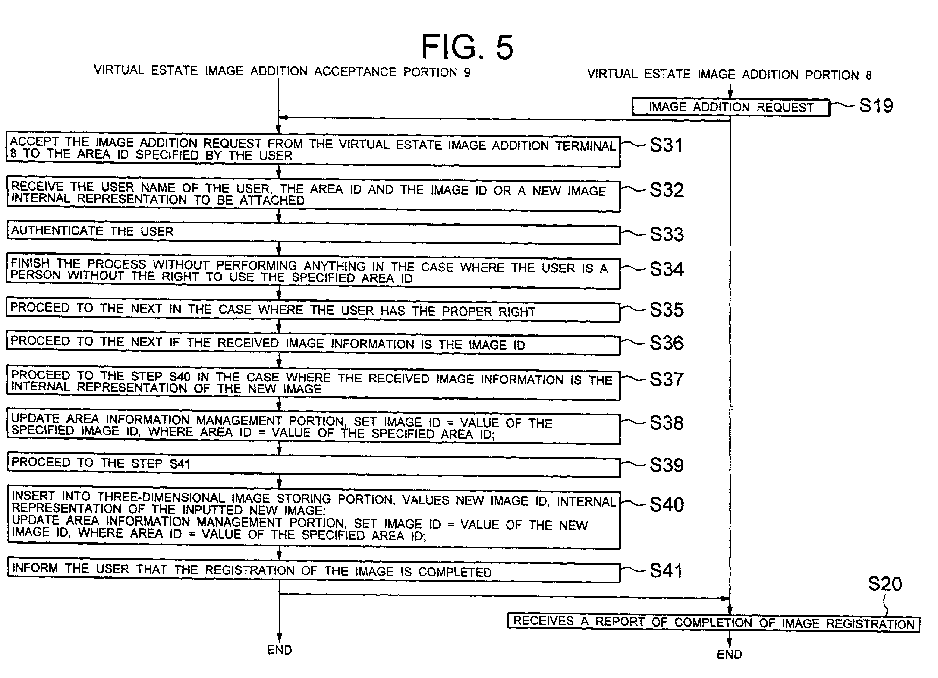

The virtual estate image addition portion 8 accepts the request to attach the image on the area from the user who already has the right to use the specific area of the virtual estate, and collaborates with the virtual estate image addition acceptance portion 9, and that operation will be described by referring to a flowchart in FIG. 5. If the virtual estate image addition acceptance portion 9 accepts the image addition request (step S19) from the virtual estate image addition portion 8 to the area ID specified by the user (step S31), it receives the user name of the user, the area ID and the image ID or a new image internal representation to be attached (steps S32). And it authenticates the user (step S33). In the case where the user is a person without the right to use the area ID, it informs the user that he or she has not the right to use the area and finishes the process without performing anything (step S34).

In the case where the user has the proper right (step S35) and if the received image information is the image ID (step S36), it writes the specified image ID to the "Image ID" item of the record having the specified "Area ID" item of the area information management portion 2. If this is represented by the SQL equation, it will be as follows.
update Area information management portion, set Image ID = value of the specified Image ID, where Area ID = value of the specified Area ID;

In the case where the received image information is the internal representation of the new image (step S37), it creates a new record in the three-dimensional image storing portion 3 and generates a new image ID to store it in the "Image ID" item of the three-dimensional image storing portion 3, and stores the received internal representation in the "Internal representation" item of the same record (step S40). And it extracts the record having the value of the specified "Area ID" item of the area information management portion 2 and writes the new image ID to the "Image ID" item of the record. If this is represented by the SQL equation, it will be as follows (step S38).
insert into Three-dimensional image storing portion, values New Image ID, internal representation of the inputted new image;
update Area information management portion, set Image ID = value of the new Image ID, where Area ID = value of the specified Area ID;

And the user is informed that the registration of the image is completed (step S41). The virtual estate image addition portion 8 receives this report of completion of the registration of the image (step S20).

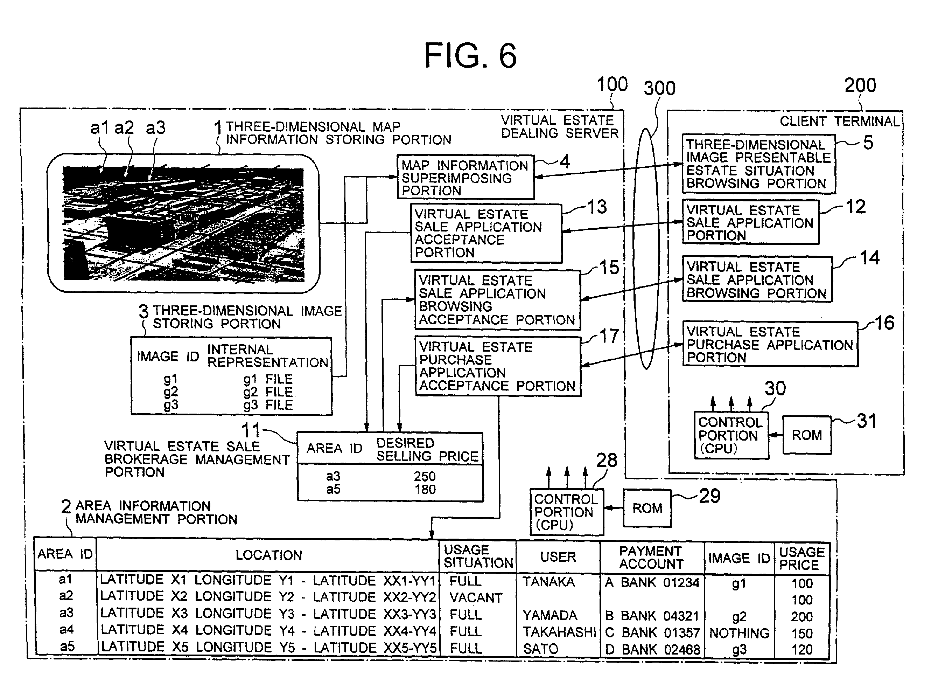

FIG. 6 shows a second embodiment of the present invention. The second embodiment is intended to be used by the user when selling his or her right to use to another person. In addition, while the second embodiment will be independently described, it is also possible to render it subordinate to the first embodiment. To be more specific, it is possible to include the virtual estate usage application acceptance portion 7 and the virtual estate image addition acceptance portion 9 in the virtual estate dealing server 100 and to include the virtual estate usage application portion 6 and the virtual estate image addition portion 8 in the client terminal 200.

The server 100 includes a virtual estate sale brokerage management portion 11, a virtual estate sale application acceptance portion 13, a virtual estate sale application browsing acceptance portion 15 and a virtual estate purchase application acceptance portion 17. In addition, the client terminal 200 includes a virtual estate sale application portion 12 and avirtual estate sale application browsing portion 16. The area information management portions 2, the three-dimensional image storing portion 3, a map information superimposing portion 4 and the estate situation browsing portion 5 are the same as those in the first embodiment.

The virtual estate sale brokerage management portion 11 has the area currently for sale among the areas owned by the owners having the rights to use them totaled and complemented in the form of the pair of the desired area for sale ID and the desired selling price. This is represented by the table of the relational database.

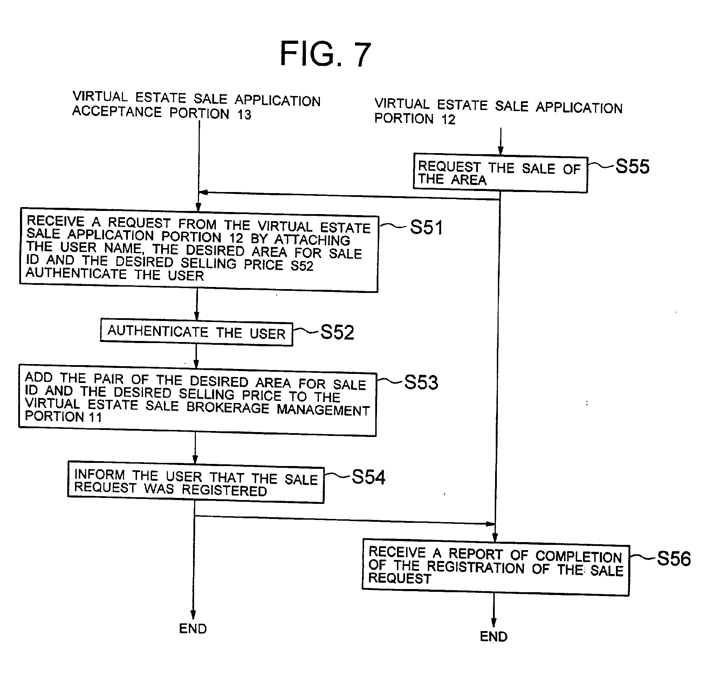

The virtual estate sale application portion 12 is used to input an application for a sale request when the user having the right to use the area wants to sell the area. The virtual estate sale application acceptance portion 13 collaborates with the virtual estate sale application portion 12, and its operation will be described hereafter by referring to the flow in FIG. 7.

If the virtual estate sale application acceptance portion 13 receives the request from the virtual estate sale application portion 12 (step S55) by attaching the user name, the desired area for sale ID and the desired selling price (step S51), it first authenticates the user (step S52) and then adds the pair of the specified area ID and the desired selling price to the virtual estate sale brokerage management portion 11 (step S53). This is implemented as follows by the SQL equation.
insert into Virtual estate sale brokerage management portion, values Desired area for sale ID, desired selling price;

And once the user is informed that the sale request was registered (step S54), this report of completion of the registration of the sale request is received by the virtual estate sale application portion 12 (step S56).

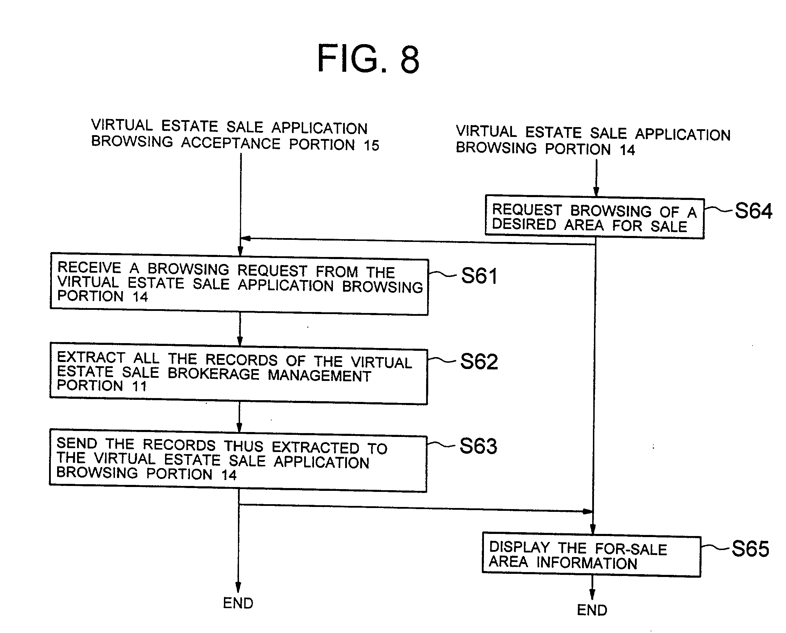

A virtual estate sale application browsing portion 14 is used by the user desirous of browsing the desired area for sale to input the request for browsing of current for-sale area information, and collaborates with the virtual estate sale application browsing acceptance portion 15. That operation will be described by referring to the flow in FIG. 8.

On receipt of the browsing request (step S64) from the virtual estate sale application browsing portion 14 (step S61), the virtual estate sale application browsing acceptance portion 15 extracts all the records of the virtual estate sale brokerage management portion 11 (step S62). This is implemented as follows by the SQL equation.

Select Area ID, Desired selling price from Virtual estate sale brokerage management portion;

And the records thus extracted are sent to the virtual estate sale application browsing portion 14 (step S63). The virtual estate sale application browsing portion 14 displays the for-sale area information that is the records thus sent and provides it to the user (step S65). As for this presentation of the for-sale area information by the virtual estate sale application browsing portion 14, the method of specifically presenting it in the area portion in the three-dimensional stereoscopic image presented in the estate situation browsing portion 5 and the method of separately presenting it in a representation form are thinkable. Accordingly, it is also possible to include the functions of the virtual estate sale application browsing portion 14 in the estate situation browsing portion 5.

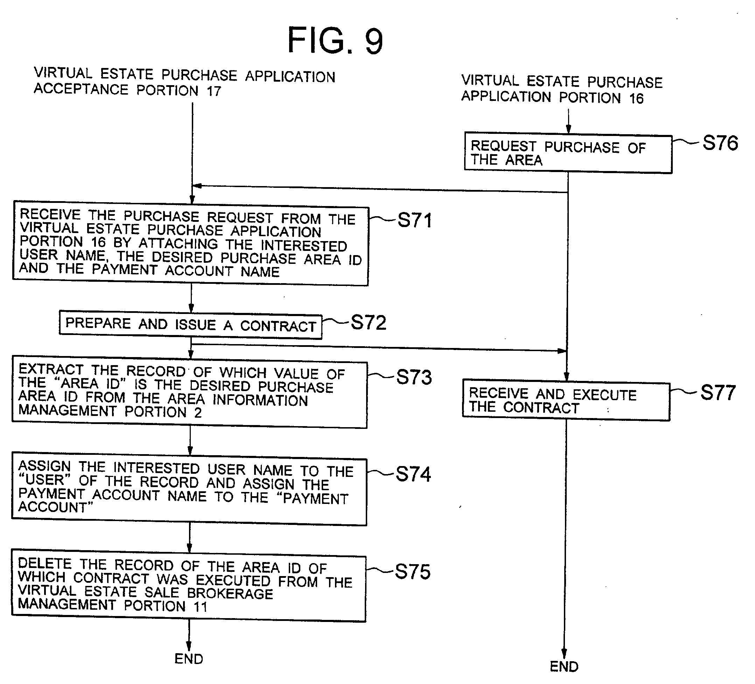

The virtual estate sale application portion 16 is used by the user desirous of purchasing the desired area for sale to input a purchase request, and collaborates with the virtual estate purchase application acceptance portion 17. That operation will be described by referring to the flow in FIG. 9. The virtual estate purchase application acceptance portion 17 receives the purchase request (stepS76) of the interested user from the virtual estate purchase application portion 16 by attaching the interested user name, the desired purchase area ID and the payment account name (step S71), and assigns the received values to the following variables.
N <- Interested user name
I <- Desired purchase area ID
A <- Payment account name

Next, a contract describing a transfer of the right to use the area is prepared in return for the interested user's payment of the desired selling price of the desired purchase area ID to the current holder of the right, and the contract is issued after obtaining approval thereto of both the interested user and the current holder of the right (steps S72 and 77). This process can be entirely executed on the computer, or it is also feasible to execute the contract by actually outputting the contract on paper and having it directly signed by both parties. And it extracts the record of which value of the "Area ID" item is the desired purchase area ID from the area information management portion 2 (steps S73), assigns the interested user name to the "User" item, and assigns the above described payment account name to the " Payment account" item (step S74). This can be represented by the SQL equation as follows.

Update Area information management portion, set User = N, Payment account = A, where select User, Payment account from Area information management portion, where Area ID = I

On the other hand, the record of the area ID of which contract was executed is deleted from the virtual estate sale brokerage management portion 11 (step S75). This can be represented by the SQL equation as follows.
delete from Virtual estate sale brokerage management portion, where Area ID = I;

Thus, processing of the second embodiment is implemented by input-output operation to the relational database by the SQL equation.

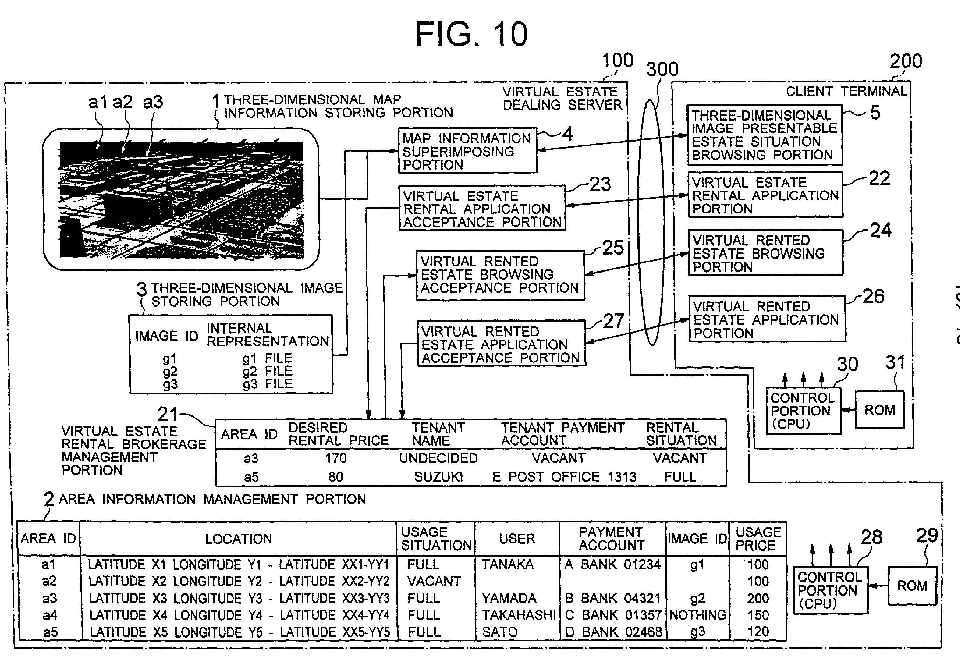

FIG. 10 is a diagram showing a third embodiment of the present invention. The third embodiment is intended for rental brokerage wherein the user rents to a third party the area that he or she has the right to use, or the third party rents the area portion where the virtual real estate exists. While it will be described independently of the first and second embodiments, it is also possible to render it subordinate to only the first or second embodiment, or further to both the first and second embodiments.

The server 100 includes a virtual estate rental brokerage management portion 21, a virtual estate rental application acceptance portion 23, a virtual rented estate browsing acceptance portion 25 and a virtual rented estate application acceptance portion 27. Moreover, the client terminal 200 includes avirtual estate rental application portion 22, a virtual rented estate browsing portion 24 and a virtual rented estate application portion 26. The three-dimensional map information storing portion 1, the area information management portions 2, the three-dimensional image storing portion 3, a map information superimposing portion 4 and the estate situation browsing portion 5 are the same as those in the first embodiment.

The virtual estate rental brokerage management portion 21 records all the areas currently proposed or used as rental matters, and consists of a Rental situation item for recording the situation of whether or not currently rented for each area, the Desired area for rent ID item, the Desired rental price item thereof, a Tenant name item for holding the tenant name, and a Tenant payment account item for storing the payment account when the tenant pays the rent. These are represented by the table of the relational database.

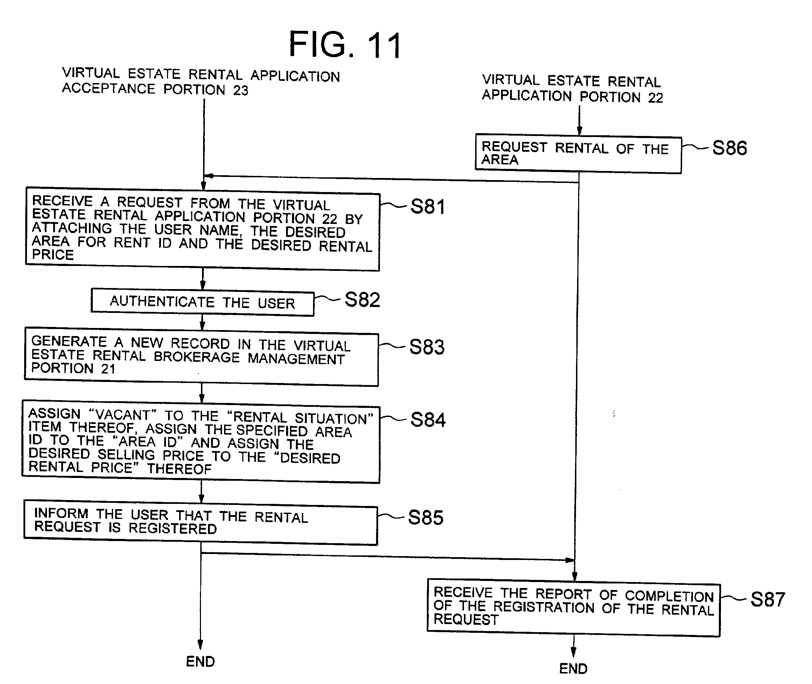

The virtual estate rental application portion 22 is used to input an application for the rental request when the user having the right to use the area wants to rent the area, and collaborates with the virtual estate rental application acceptance portion 23, and its operation will be described hereafter by referring to the flow in FIG. 11. If the virtual estate rental application acceptance portion 23 receives the request from the virtual estate rental application portion 22 (step S86) by attaching the user name, the desired area for rent ID and the desired rental price (step S81), it first authenticates the user (step S82) and then generates a new record in the virtual estate rental brokerage management portion 21 (step S83), assigns "Vacant" to the Rental situation item thereof, assigns the above described specified area ID to the Area ID item thereof, and assigns the desired selling price to the Desired rental price item thereof (step S84). This is implemented as follows by the SQL equation.
Insert into Virtual estate rental brokerage management portion, values Desired area for rent ID, desired rental price;

And the user is informed that the rental request was registered (step S85). The report of completion of the registration of the rental request is received by the virtual estate rental application portion 22 (step S87).

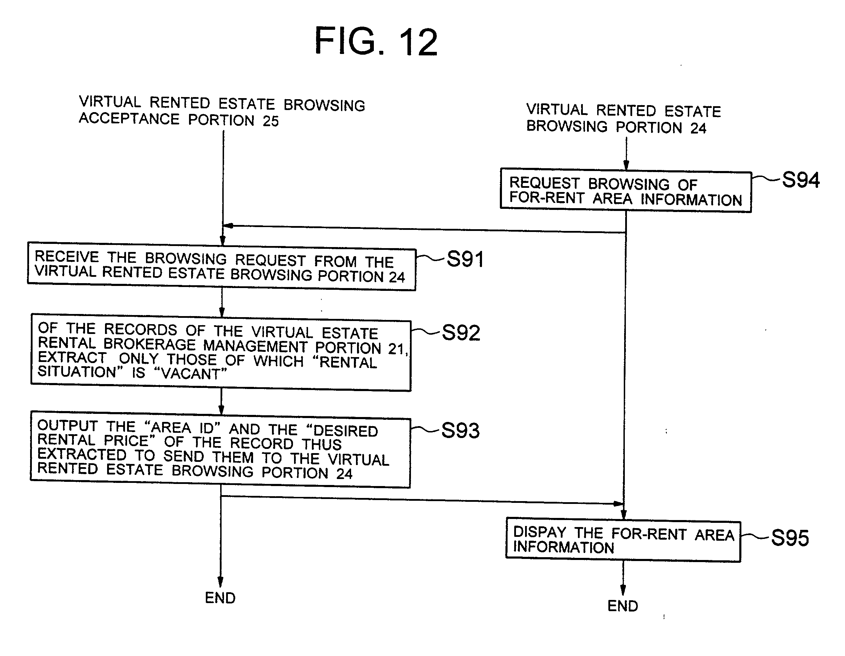

The virtual rented estate browsing portion 24 is used to input a request for browsing current for-rent area information by the user desirous of browsing the desired area for rent, and collaborates with the virtual rented estate browsing acceptance portion 25. Its operation will be described by referring to the flow in FIG. 12. If the virtual rented estate browsing acceptance portion 25 receives the browsing request (step S94) from the virtual rented estate browsing portion 24 (step S91), among the records in the virtual estate rental brokerage management portion 21, it extracts those of which Rental situation item is "Vacant" (step S92), and outputs the value of the Area ID item thereof and the value of the Desired rental price item thereof to send them to the virtual rented estate browsing portion 24 (step S93). This is implemented as follows by the SQL equation.

Select Area ID, Desired rental price from Virtual estate rental brokerage management portion, where Rental situation item = Vacant;

The virtual rented estate browsing portion 24 displays the for-rent area information to provide it to the user (step S95). As for the presentation of the for-rent area information by the virtual rented estate browsing portion 24, the method of specifically presenting it to the area portion in the three-dimensional stereoscopic image presented in the estate situation browsing portion 5 and the method of presenting it in a representation form separately are thinkable. Accordingly, it is also possible to include the function of the virtual rented estate browsing portion 24 in the estate situation browsing portion 5.

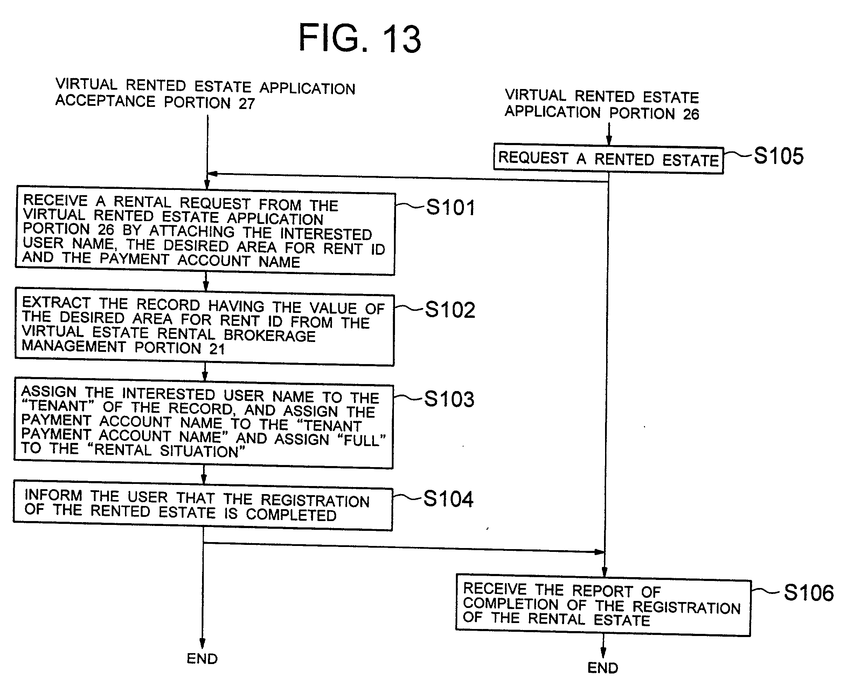

The virtual rented estate application portion 26 is used to input the rented estate (rental) request by the user who is to rent the area for rent, and collaborates with the virtual rented estate application acceptance portion 27. Its operation will be described by referring to the flow in FIG. 13. The virtual rented estate application acceptance portion 27 receives the rental request (step S105) of an interested user from virtual rented estate application portion 26 by attaching the interested user name, the desired area for rent ID and the payment account name (step S101). The received values are assigned to the following variables.
N <- Interested user name
I <- Desired area for rent ID
A <- Payment account name

Next, it extracts the record having the value of the desired area for rent ID as the value of the "Area ID" item from the virtual estate rental brokerage management portion 21 (step S102), assigns the interested user name to the "Tenant" item of the record, and assigns the payment account name to the "Tenant payment account" item and assigns "Full" to the "Rental situation" item (step S103). This can be represented by the SQL equation as follows.
Update Virtual estate rental brokerage management portion,
set Tenant = N, Tenant payment account = A, Rental situation = Full,
where select Tenant, Tenant payment account, Rental situation
from Virtual estate rental brokerage management portion,
where Area ID = I;

Thus, the process of the third embodiment is implemented by input-output operation to the relational database by the SQL equation.

Lastly, the user is informed that the registration of the rented estate is completed (step S104). The report of completion of the registration of the rental estate is received by the virtual rented estate application portion 26 (step S106).

Moreover, in the case of this rental, it is also a matter of course that a contract process of preparing and exchanging the contract is introduced.

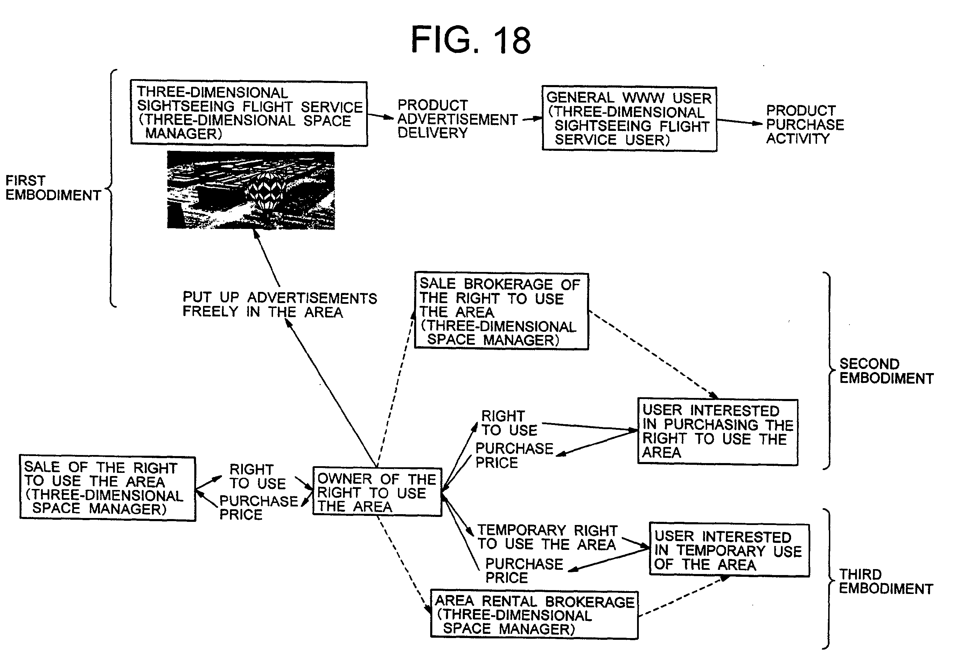

FIG. 18 shows outline principle views of the respective embodiments of the present invention, where, in the first embodiment, the user receives a three-dimensional sightseeing flight service while the holder of the right to use the area can present his or her own product advertisement and so on to the user receiving the service, and the second embodiment allows the right to be sold for each area of the three-dimensional space and the person who purchased it can add his or her own advertising tower and so on to the area. Furthermore, in the third embodiment, the right to use the area can be temporarily rented for each area of the three-dimensional space and the person who rented it can add his or her own advertising tower and so on to the area likewise.

According to the present invention, stereoscopic image information is provided to the user by using three-dimensional map information and adding so-called three-dimensional object information such as buildings thereto, and the screen displaying the stereoscopic image information is divided into the areas of dealing units to render it virtually capable of dealings and the user having acquired the right to use the area can add an advertisement thereto so as to have the effect that the user can effectively use the advertisement in the area and enjoy viewing it while successively changing the view position as if on the sightseeing flight on the display screen of the stereoscopic image.

## Claims

1. A virtual real-estate dealing method, including:
a first step of, in response to a browsing request from a client terminal, generating on a service providing server side, composite three-dimensional map image data by using three-dimensional map image data representing geographical information three-dimensionally and three-dimensional image data to be attached on areas of the three-dimensional map image data divided into minimum dealing units and sending it to said client terminal;
a second step of, on said client terminal side, receiving said composite three-dimensional map image data that is sent and performing three-dimensional stereoscopic image representation to provide it to a user, and in response to specification of a change of a view position from said user, regenerating the three-dimensional stereoscopic image representation as seen from this specified view position;
a third step of, in response to a usage browsing request from said client terminal, sending to said client terminal, of area information including a location, a usage situation, a user name and so on registered for each of said areas, at least said usage situation information on said service providing server side;
a fourth step of, on said client terminal side, sending to said service providing server a usage application request of the area together with the user name in response to selection of a specific area by said user; and
a fifth step of, on said service providing server side, giving information indicating that it is in use as said usage situation included in said area information of the area of said usage application request and also writing said user name to said area information.

2. The virtual real-estate dealing method according to claim 1, further including:
a sixth step of, on said client terminal side, in response to a request for image attachment on the area from said user, sending to said service providing server an image addition request together with the image data to be attached; and
a seventh step of, on said service providing server side, writing to said three-dimensional image data said image data to be attached in response to said image addition request.

3. The method according to claim 1 or 2,
wherein said area information includes a usage price of said area and a payment account name of the user of said area who should pay the usage charge thereof, and the payment account name of said user is also sent in said fourth step, and this payment account name is also written in said fifth step.

4. A virtual real-estate dealing method, including:
a first step of, in response to a browsing request from a client terminal, generating on a service providing server side, composite three-dimensional map image data by using three-dimensional map image data representing geographical information three-dimensionally and three-dimensional image data to be attached on areas of the three-dimensional map image data divided into minimum dealing units and sending it to said client terminal;
a second step of, on said client terminal side, receiving said composite three-dimensional map image data that is sent and performing three-dimensional stereoscopic image representation to provide it to a user, and in response to specification of a change of a view position from said user, regenerating the three-dimensional stereoscopic image representation as seen from this specified view position;
a third step of, in response to said request for browsing of a desired area for sale from said client terminal, of for-sale information from a virtual estate sale brokerage management portion wherein said for-sale information including the desired area for sale and a desired selling price is registered, taking out and sending at least said desired area for sale and said desired selling price on said service providing server side;
a fourth step of, on said client terminal side, displaying said desired area for sale and said desired selling price that are sent and sending to said service providing server a desired purchase area of an interested user together with the user name;
a fifth step of, on said service providing server side, issuing a sales contract of the desired purchase area and, of area information including a location, a usage situation, a user name and so on registered for each of said areas, writing the new user name as said user name included in said area information of the area of the executed sales contract; and
a sixth step of, on said service providing server side, deleting said for-sale information on said area of the executed sales contract registered with said virtual estate sale brokerage management portion.

5. The virtual real-estate dealing method according to claim 4, further including:
a seventh step of, in response to the sale request of said area of the user of the area, sending to said service providing server said for-sale information together with said sale request on said client terminal side;
an eighth step of, in response to the sale request, referring to said area information to authenticate said user and registering said for-sale information with the virtual estate sale brokerage management portion on said service providing server side.

6. The method according to claim 4 or 5,
wherein said area information includes the payment account name of the user of said area who should pay the usage charge thereof, and the payment account name of said user is also sent in said fourth step, and this payment account name is also written in said fifth step.

7. A virtual real-estate dealing method, including:
a first step of, in response to a browsing request from a client terminal, generating on a service providing server side, composite three-dimensional map image data by using three-dimensional map image data representing geographical information three-dimensionally and three-dimensional image data to be attached on areas of the three-dimensional map image data divided into minimum dealing units and sending it to said client terminal;
a second step of, on said client terminal side, receiving said composite three-dimensional map image data that is sent and performing three-dimensional stereoscopic image representation to provide it to a user, and in response to specification of a change of a view position from said user, regenerating the three-dimensional stereoscopic image representation as seen from this specified view position;
a third step of, in response to said request for browsing of a desired area for rent from said client terminal, of for-rent information indicated as vacant by rental situation information from a virtual estate rental brokerage management portion wherein said for-rent information including the desired area for rent and a desired rental price, said rental situation information indicating the rental situation of said desired area for rent, and tenant information indicating the user name renting said desired area for rent are registered, extracting and sending at least said desired area for rent and said desired rental price on said service providing server side;
a fourth step of, on said client terminal side, displaying said desired area for rent and said desired rental price that are sent and sending to said service providing server said desired area for rent selected by an interested user together with the user name;
a fifth step of, on said service providing server side, writing the new user name to said tenant information of said desired area for rent of said virtual estate rental brokerage management portion; and
a sixth step of, on said service providing server side, indicating it as rented in said rental situation information of this desired area for rent registered with said virtual estate rental brokerage management portion.

8. The virtual real-estate dealing method according to claim 7, further including:
a seventh step of, in response to the rent request of the area of the user of said area, sending to said service providing server said for-rent information together with said rent request on said client terminal side;
an eighth step of, in response to the rent request, on said service providing server side, referring to the area information including a location, a usage situation, a user name and so on registered for each of said areas to authenticate said user and registering said for-rent information with the virtual estate rental brokerage management portion;

9. The method according to claim 7 or 8,
wherein a payment account name to pay the rent of the area is registered with said virtual estate rental brokerage management portion, and the payment account name of said user is also sent in said fourth step, and this payment account name is also written to said portion in said fifth step.

10. A virtual real-estate dealing server, including:
an area information management portion for storing area information including a location, a usage situation, a user name and so on of each of areas of three-dimensional map image data divided into minimum dealing units;
a three-dimensional image storing portion for storing three-dimensional image data to be attached on said area;
a map superimposing portion for generating composite three-dimensional map image data by using three-dimensional map image data representing geographical information three-dimensionally and said three-dimensional image data stored in said three-dimensional image storing portion and sending it to a client terminal;
a usage browsing acceptance portion for, in response to an estate usage browsing request from said client terminal, referring to said area information management portion and sending to said client terminal at least said usage situation information of said area information; and
a usage application acceptance portion for, in response to an estate usage application request from said client terminal, accepting a usage application of a specific area from said client terminal together with the user name and, of said area information stored in said area information management portion, giving information indicating that it is in use as said usage situation of said area information of the area of said usage application request and also writing said user name to the area information.

11. The virtual real-estate dealing server according to claim 10, further including an image addition acceptance portion for, in response to an image addition request including the image data to be attached on said area from the user of said area, writing said image data to be attached to said three-dimensional image data.

12. The server according to claim 10 or 11,
wherein said area information includes the usage price of said area and the payment account name of the user of said area who should pay the usage charge thereof, and said usage application acceptance portion also writes the payment account name of said user to said area information in response to the estate usage application request from said client terminal.

13. A virtual real-estate dealing server, including:
an area information management portion for storing area information including a location, a usage situation, a user name and so on of each of areas of three-dimensional map image data divided into minimum dealing units;
a three-dimensional image storing portion for storing three-dimensional image data to be attached on said area;
a map superimposing portion for generating composite three-dimensional map image data by using three-dimensional map image data representing geographical information three - dimensionally and said three-dimensional image data stored in said three-dimensional image storing portion and sending it to a client terminal;
a sale brokerage management portion for registering for-sale information including a desired area for sale and a desired selling price;
a sale application browsing acceptance portion for, in response to a request for browsing of said desired area for sale from said client terminal, of said for-sale information registered with said sale brokerage management portion, extracting and sending at least said desired area for sale and said desired selling price; and
a purchase application acceptance portion for, in response to reception of a desired purchase area of a user desirous of purchase and the user name from said client terminal, issuing a sales contract on the desired purchase area and, writing the new user name as said user name included in said area information of the area of the executed sales contract, and further deleting said for-sale information on said area of the executed sales contract registered with said sale brokerage management portion.

14. The virtual real-estate dealing server according to claim 13, further including a sale application acceptance portion for, in response to the sale request indicating said for-sale information from the user of said area, registering said for-sale information with the sale brokerage management portion.

15. The server according to claim 13 or 14,
wherein said area information includes the payment account name of the user of said area who should pay the usage charge thereof, and said purchase application acceptance portion also writes the payment account name of said user to said area information in response to reception of the desired purchase area of the user desirous there of, the user name and the payment account name of said user from said client terminal.

16. A virtual real-estate dealing server, including:
a three-dimensional image storing portion for storing three-dimensional image data to be attached on areas of the three-dimensional image data divided into minimum dealing units;
a map superimposing portion for generating composite three-dimensional map image data by using three-dimensional map image data representing geographical information three-dimensionally and said three-dimensional image data stored in said three-dimensional image storing portion and sending it to a client terminal;
a virtual estate rental brokerage management portion for registering for-rent information including a desired area for rent and a desired rental price, rental situation information indicating a rental situation of said desired area for rent, and tenant information indicating a user name renting said desired area for rent;
a rented estate browsing acceptance portion for, in response to a request for browsing of said desired area for rent, of said for-rent information indicating said rental situation information as vacant of said for-rent information registered with said virtual estate rental brokerage management portion, extracting and sending at least said desired area for rent and said desired rental price;
a rented estate application acceptance portion for receiving said area for rent desired to be rented and the user name from said client terminal, and writing the new user name to said tenant information on said desired area for rent of said virtual estate rental brokerage management portion, and further indicating it as rented in said rental situation information of this desired area for rent registered with said virtual estate rental brokerage management portion.

17. The virtual real-estate dealing server according to claim 16, further including a rental application acceptance portion for registering said for-rent information with said virtual estate rental brokerage management portion in response to the rent request indicating said for-rent information from the user of said area.

18. The server according to claim 16 or 17,
wherein the payment account name to pay the rent of said area in said area information is registered with said virtual estate rental brokerage management portion, and said rented estate application acceptance portion receives said payment account name in addition to said area for rent desired to be rented and the user name from said client terminal and also writes said payment account name to said virtual estate rental brokerage management portion.

19. A client terminal, including:
an estate situation browsing portion for having composite three-dimensional map image data generated by said service providing server by using three-dimensional map image data representing geographical information three-dimensionally and three-dimensional image data to be attached on areas of the three-dimensional map image data divided into minimum dealing units, said service providing server storing in each storing portion said three-dimensional map image data and said three-dimensional image data, and also receiving said composite three-dimensional map image data and performing three-dimensional stereoscopic image representation to provide it to a user, and in response to specification of a change of a view position from said user, regenerating the three-dimensional stereoscopic image representation as seen from this specified view position;
a browsing application portion for making a usage browsing request for browsing a usage situation of said area and having said service providing server send at least information on said usage situation of the area information including a location, a usage situation, a user name and so on registered for each of said areas so as to present said information on the usage situation that is sent; and
a usage application portion for making a usage application request for applying for usage of said area and having said service providing server give information indicating that it is in use as said usage situation included in said area information of the area of said usage application request and further write said user name having applied for the usage to said area information.

20. The client terminal according to claim 19, further including an image addition portion for making the image addition request from the user of said area for requesting attachment of the three-dimensional image data on the area, and having said requested three-dimensional image data registered with said service providing server.

21. A client terminal, including:
an estate situation browsing portion for having composite three-dimensional map image data generated by said service providing server by using three-dimensional map image data representing geographical information three-dimensionally and three-dimensional image data to be attached on areas of the three-dimensional map image data divided into minimum dealing units, said service providing server storing in each storing portion said three-dimensional map image data and said three-dimensional image data, and also receiving said composite three-dimensional map image data and performing three-dimensional stereoscopic image representation to provide it to a user, and in response to specification of a change of a view position from said user, regenerating the three-dimensional stereoscopic image representation as seen from this specified view position;
a sale application browsing portion for making a browsing request to said service providing server with which for-sale information including a desired area for sale and a desired selling price is registered, for the purpose of requesting presentation of said desired area for sale, and having, of said for-sale information, at least said desired area for sale and said desired selling price sent, and presenting said desired area for sale and said desired selling price that are sent; and
a purchase application portion for sending a purchase request for purchasing said presented desired area for sale together with the desired purchase area and the user name, having said service providing server issue a sales contract on the desired purchase area and, of the area information including a location, a usage situation, a user name and so on registered for each of said areas, write the new user name as said user name included in said area information of the area of the sales contract, and further delete said for-sale information on said area of the executed sales contract.

22. The client terminal according to claim 21, further including a sale application portion for sending a sale request for requesting sale of said area from the user thereof together with said for-sale information and having the for-sale information that is sent registered with said service providing server.

23. A client terminal, including:
an estate situation browsing portion for having composite three-dimensional map image data generated by said service providing server by using three-dimensional map image data representing geographical information three-dimensionally and three-dimensional image data to be attached on areas of the three-dimensional map image data divided into minimum dealing units, said service providing server storing in each storing portion said three-dimensional map image data and said three-dimensional image data, and also receiving said composite three-dimensional map image data and performing three-dimensional stereoscopic image representation to provide it to a user, and in response to specification of a change of a view position from said user, regenerating the three-dimensional stereoscopic image representation as seen from this specified view position;
a rented estate application browsing portion for making a browsing request to said service providing server with which for-rent information including a desired area for rent and a desired rental price, rental situation information indicating a rental situation of said desired area for rent and tenant information indicating a user name for renting said desired area for rent are registered, for the purpose of requesting presentation of said desired area for rent, and having, of said for-rent information of which rental situation information indicates a vacancy, at least said desired area for rent and said desired rental price sent, and presenting said desired area for rent and said desired rental price that are sent; and
a rented estate application portion for sending a rental request for renting said presented desired area for rent together with the desired area for rent and the user name, having said service providing server write the new user name in said tenant information of the desired area for rent and further indicate it as rented in said rental situation information of the desired area for rent.

24. The client terminal according to claim 23, further including a rental application portion for sending a rental request for requesting rental of said area from the user thereof together with said for-rent information and having the for-rent information that is sent registered with said service providing server.

25. A record medium having a program for a server recorded, said program causing a computer to execute:
an area information management process of storing area information including a location, a usage situation, a user name and so on of each of areas of three-dimensional map image data divided into minimum dealing units;
a three-dimensional image storing process of storing three-dimensional image data to be attached on said area;
a map superimposing process of generating composite three-dimensional map image data by using three-dimensional map image data representing geographical information three-dimensionally and said three-dimensional image data stored by said three-dimensional image storing process and sending it to a client terminal;
a usage browsing acceptance process of, in response to a estate usage browsing request from said client terminal, sending to said client terminal at least said usage situation information of said area information; and
a usage application acceptance process of, in response to a estate usage application request from said client terminal, accepting a usage application of a specific area from said client terminal together with the user name and, of said area information stored in said area information management portion, giving information indicating that it is in use as said usage situation of said area information of the area of said usage application request and also writing said user name to the area information.

26. A record medium having a program for a server recorded, said program causing a computer to execute:
an area information management process of storing area information including a location, a usage situation, a user name and so on of each of areas of three-dimensional map image data divided into minimum dealing units;
a three-dimensional image storing process of storing three-dimensional image data to be attached on said area;
a map superimposing process of generating composite three-dimensional map image data by using three-dimensional map image data representing geographical information three-dimensionally and said three-dimensional image data stored by said three-dimensional image storing process and sending it to a client terminal;
a sale brokerage management process of registering for-sale information including a desired area for sale and a desired selling price;
a sale application browsing acceptance process of, in response to a request for browsing of said desired area for sale from said client terminal, of said for-sale information registered by said sale brokerage management process, extracting and sending at least said desired area for sale and said desired selling price; and
a purchase application acceptance process of, in response to reception of a desired purchase area of a user desirous of purchase and the user name from said client terminal, issuing a sales contract on the desired purchase area and, writing the new user name as said user name included in said area information of the area of the executed sales contract, and further deleting said for-sale information on said area of the executed sales contract registered with said sale brokerage management means.

27. A record medium having a program for a server recorded, said program causing a computer to execute:
a three-dimensional image storing process of storing three-dimensional image data to be attached on areas of three-dimensional map image data divided into minimum dealing units;
a map superimposing process of generating composite three-dimensional map image data by using three-dimensional map image data representing geographical information three-dimensionally and said three-dimensional image data stored by said three-dimensional image storing process and sending it to a client terminal;
a virtual estate rental brokerage management process of registering for-rent information including a desired area for rent and a desired rental price, rental situation information indicating a rental situation of said desired area for rent, and tenant information indicating a user name renting said desired area for rent;
a rented estate browsing acceptance process of, in response to a request for browsing of said desired area for rent, of said for-rent information indicating said rental situation information as vacant of said for-rent information registered by said virtual estate rental brokerage management process, extracting and sending at least said desired area for rent and said desired rental price; and
a rented estate application acceptance process of receiving said area for rent desired to be rented and the user name from said client terminal, and writing the new user name to said tenant information on said desired area for rent registered by said virtual estate rental brokerage management process, and further indicating it as rented in said rental situation information of this desired area for rent registered by said virtual estate rental brokerage management process.

28. A record medium having a program for a client recorded, said program causing a computer to execute:
an estate situation browsing process of having composite three-dimensional map image data generated by said service providing server by using three-dimensional map image data representing geographical information three-dimensionally and three-dimensional image data to be attached on areas of the three-dimensional map image data divided into minimum dealing units, said service providing server storing in each storing portion said three-dimensional map image data and said three-dimensional image data, and also receiving said composite three-dimensional map image data and performing three-dimensional stereoscopic image representation to provide it to a user, and in response to specification of a change of a view position from said user, regenerating the three-dimensional stereoscopic image representation as seen from this specified view position;
a browsing application process of making a usage browsing request for browsing a usage situation of said area and having said service providing server send at least information on said usage situation of the area information including a location, a usage situation, a user name and so on registered for each of said areas so as to present said information on the usage situation that is sent; and
a usage application process of making a usage application request for applying for usage of said area and having said service providing server give information indicating that it is in use as said usage situation included in said area information of the area of said usage application request and further write said user name having applied for the usage to said area information.

29. A record medium having a program for a client recorded, said program causing a computer to execute:
an estate situation browsing process of having composite three-dimensional map image data generated by said service providing server by using three-dimensional map image data representing geographical information three-dimensionally and three-dimensional image data to be attached on areas of the three-dimensional map image data divided into minimum dealing units, said service providing server storing in each storing portion said three-dimensional map image data and said three-dimensional image data, and also receiving said composite three-dimensional map image data and performing three-dimensional stereoscopic image representation to provide it to a user, and in response to specification of a change of a view position from said user, regenerating the three-dimensional stereoscopic image representation as seen from this specified view position;
a sale application browsing process of making a browsing request to said service providing server with which for-sale information including a desired area for sale and a desired selling price is registered, for the purpose of requesting presentation of said desired area for sale, and having, of said for-sale information, at least said desired area for sale and said desired selling price sent, and presenting said desired area for sale and said desired selling price that are sent; and
a purchase application process of sending a purchase request for purchasing said presented desired area for sale together with the desired purchase area and the user name, having said service providing server issue a sales contract on the desired purchase area and, of the area information including a location, a usage situation, a user name and so on registered for each of said areas, write the new user name as said user name included in said area information of the area of the sales contract, and further delete said for-sale information on said area of the executed sales contract.

30. A record medium having a program for a client recorded, said program causing a computer to execute:
an estate situation browsing process of having composite three-dimensional map image data generated by said service providing server by using three-dimensional map image data representing geographical information three-dimensionally and three-dimensional image data to be attached on areas of the three-dimensional map image data divided into minimum dealing units, said service providing server storing in each storing portion said three-dimensional map image data and said three-dimensional image data, and also receiving said composite three-dimensional map image data and performing three-dimensional stereoscopic image representation to provide it to a user, and in response to specification of a change of a view position from said user, regenerating the three-dimensional stereoscopic image representation as seen from this specified view position;
a rented estate application browsing process of making a browsing request to said service providing server with which for-rent information including a desired area for rent and a desired rental price, rental situation information indicating a rental situation of said desired area for rent and tenant information indicating a user name for renting said desired area for rent are registered, for the purpose of requesting presentation of said desired area for rent, and having, of said for-rent information of which rental situation information indicates a vacancy, at least said desired area for rent and said desired rental price sent, and presenting said desired area for rent and said desired rental price that are sent; and a rented estate application process of sending a rental request for renting said presented desired area for rent together with the desired area for rent and the user name, having said service providing serverwrite the new user name in said tenant information of the desired area for rent and further indicate it as rented in said rental situation information of the desired area for rent.
